(19) **Europäisches Patentamt / European Patent Office / Office européen des brevets**

(11) **EP 4 648 322 A1**

(12) **EUROPEAN PATENT APPLICATION**
published in accordance with Art. 153(4) EPC

(43) Date of publication:
**12.11.2025 Bulletin 2025/46**

(21) Application number: **23917222.4**

(22) Date of filing: **29.11.2023**

(51) International Patent Classification (IPC):
**H04L 1/18** (2023.01)     **H04L 5/00** (2006.01)

(52) Cooperative Patent Classification (CPC):
**H04L 1/1861; H04L 1/1607; H04L 1/18;
H04L 1/1812; H04L 5/00; H04W 4/80; H04W 24/02;
H04W 72/0453; H04W 72/231; H04W 88/04**

(86) International application number:
**PCT/CN2023/134951**

(87) International publication number:
**WO 2024/152754 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.01.2023  CN 202310208329
10.03.2023  CN 202310260750**

(71) Applicant: **Huawei Technologies Co., Ltd.
Shenzhen, Guangdong 518129 (CN)**

(72) Inventors:
- **ZHANG, Yanqing
Shenzhen, Guangdong 518129 (CN)**
- **LI, Xueru
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD, NETWORK DEVICE, AND TERMINAL DEVICE**

(57)     This application provides a communication method, including: A first terminal device receives first downlink data from a network device through a first link; and after decoding the first downlink data to obtain a first decoding result, the first terminal device sends first information to a second terminal device through a second link, where the first information includes first hybrid automatic repeat request acknowledgement HARQ-ACK information, and the first HARQ-ACK information indicates the first decoding result. The first link is a link between the first terminal device and the network device, and the second link is a link between the first terminal device and the second terminal device. The first terminal device feeds back HARQ-ACK information of downlink data to the second terminal device. In this way, the first terminal device can be prevented from directly feeding back the HARQ-ACK information of the downlink data to the network device, thereby reducing uplink communication overheads of the first terminal device.

FIG. 7

**Description**

This application claims priorities to Chinese Patent Application No. 202310208329.6, filed with the China National Intellectual Property Administration on January 20, 2023 and entitled "XR TRANSMISSION METHOD, TERMINAL DEVICE, NETWORK DEVICE, AND COMMUNICATION SYSTEM", and to Chinese Patent Application No. 202310260750.1, filed with the China National Intellectual Property Administration on March 10, 2023 and entitled "COMMUNICATION METHOD, NETWORK DEVICE, AND TERMINAL DEVICE", both of which are incorporated herein by reference in their entireties.

**TECHNICAL FIELD**

This application relates to the communication field, and specifically, to a communication method, a network device, and a terminal device.

**BACKGROUND**

In a scenario in which an extended reality (eXtended Reality, XR) device is connected to a network device, the XR device needs to communicate with a server through the network device, that is, the XR device sends uplink data (for example, sends pose (pose) information of the XR device, audio data, and video data captured by a camera of the XR device) to the server through the network device. After receiving the data, the server generates corresponding downlink data (for example, a video to be displayed on the XR device), and sends the downlink data to the XR device through the network device.

The network device is usually far away from the XR device. To ensure uplink transmission communication quality, the XR device needs to perform power amplification on a data signal before sending the uplink data. Consequently, power consumption overheads of uplink transmission are high. In addition, a battery capacity of the XR device is small. If the XR device directly sends the uplink data to the network device, a battery life of the XR device is affected. Currently, a method for reducing uplink communication power consumption of the XR device is as follows: The XR device sends the uplink data to the network device through a terminal device.

Although a manner in which the terminal device serves as a relay can avoid that the XR device directly sends the uplink data to the network device, when the XR device receives data scheduled by the network device, the XR device needs to feed back hybrid automatic repeat request acknowledgement (hybrid automatic repeat request Acknowledgement, HARQ-ACK) information to the network device. How to reduce power consumption overheads caused by uplink HARQ-ACK information feedback performed by the XR device becomes an urgent problem to be resolved.

SUMMARY

To resolve the foregoing technical problem, this application provides a communication method. In the method, a first terminal device indirectly feeds back HARQ-ACK information of downlink data to a network device through a second terminal device, to reduce uplink communication overheads of the first terminal device.

According to a first aspect, a communication method is provided. The method may be performed by a first terminal device, or may be performed by a component (for example, a chip or a circuit) of the first terminal device. This is not limited in this application. For ease of description, the following uses an example in which the first terminal device performs the method for description.

The communication method includes: The first terminal device receives first downlink data from a network device through a first link; the first terminal device decodes the first downlink data to obtain a first decoding result; and the first terminal device sends first information to a second terminal device through a second link, where the first information includes first hybrid automatic repeat request acknowledgement HARQ-ACK information, and the first HARQ-ACK information indicates the first decoding result, where the first link is a transmission link between the first terminal device and the network device, and the second link is a transmission link between the first terminal device and the second terminal device.

Based on the foregoing technical solutions, after receiving the first downlink data and decoding the first downlink data to obtain the first decoding result, the first terminal device sends, to the second terminal device through the second link, the first information including the first HARQ-ACK information, where the first HARQ-ACK information indicates the first decoding result. In the technical solutions, the first terminal device no longer directly feeds back the HARQ-ACK information of the downlink data to the network device, but first feeds back the HARQ-ACK information of the downlink data to the second terminal device through the second link, and the second terminal device forwards the HARQ-ACK information of the downlink data to the network device. This prevents the first terminal device from directly feeding back the HARQ-ACK information of the downlink data to the network device, thereby reducing uplink communication overheads of the first terminal device.

It should be noted that, in the technical solutions, the second terminal device is configured to forward, to the network device, HARQ-ACK information that is of downlink data and that is received from the first terminal device. The second terminal device is a terminal device that establishes a communication connection to each of the first terminal device and the network device. In this application, how the second terminal device learns that the second terminal device can forward the HARQ-ACK information of the downlink data for the first terminal device is not limited, including but not limited to indicating, in a preconfiguration manner or in another manner, the second terminal device to forward the HARQ-ACK information of the downlink data for the first terminal device.

With reference to the first aspect, in some implementations of the first aspect, before the first terminal device sends the first information to the second terminal device through the second link, the method further includes: The first terminal device determines a first time unit in which the first terminal device sends the first information.

Based on the foregoing technical solutions, before sending the first information to the second terminal device, the first terminal device needs to determine the first time unit for sending the first information, to avoid that the second terminal device fails in reception when the first terminal device feeds back the first information in an inappropriate time unit.

With reference to the first aspect, in some implementations of the first aspect, that the first terminal device determines the first time unit in which the first information is sent includes: The first terminal device determines a first time gap, where the first time gap is less than or equal to a time gap between the first time unit and a second time unit; and the first terminal device determines the first time unit based on the first time gap and the second time unit, where the second time unit is a time unit in which the first terminal device receives the first downlink data or a time unit in which the first terminal device receives first control information, and the first control information is used to schedule the first downlink data.

Based on the foregoing technical solutions, the first terminal device may determine, by using the first time gap, the first time unit for sending the first information, where the first time gap is less than or equal to a time gap between the first time unit and the second time unit, and the second time unit is a time unit known to the first terminal device (for example, the time unit in which the first terminal device receives the first downlink data, or the time unit in which the first terminal device receives the first control information). Therefore, the first terminal device can quickly and accurately determine the first time unit based on the first time gap when the second time unit is known.

With reference to the first aspect, in some implementations of the first aspect, that the first terminal device determines the first time gap includes: The first terminal device receives the first control information from the network device, where the first control information indicates the first time gap; or before receiving the first downlink data, the first terminal device receives first configuration information from the network device, and determines the first time gap based on the first configuration information.

Based on the foregoing technical solutions, the network device may indicate the first time gap to the first terminal device in a dynamic indication (for example, delivering the first control information) or semi-static configuration (for example, delivering the first configuration information) manner, so that the first terminal device can learn of the first time gap in different manners, thereby improving flexibility of the solutions.

With reference to the first aspect, in some implementations of the first aspect, before the first terminal device receives the first control information from the network device, the method further includes: The first terminal device receives second configuration information from the network device, where the second configuration information is used to configure a time gap set, and the first time gap is one time gap in the time gap set.

Based on the foregoing technical solutions, before indicating the first time gap, the network device may configure, for the first terminal device by using the second configuration information, the time gap set including a plurality of time gaps. When a specific time gap needs to be indicated, the time gap may be indicated by indicating a time gap index. When the network device needs to indicate different time gaps, different time gap indices may be indicated for implementation, so that signaling overheads can be reduced.

With reference to the first aspect, in some implementations of the first aspect, when the first time gap is measured in slots, that the first terminal device determines the first time gap further includes: The first terminal device determines that a subcarrier spacing (subcarrier spacing, SCS) referenced by the first time gap is a first SCS or a second SCS, where the first SCS is an SCS corresponding to the first link, the second SCS is an SCS corresponding to the second link, and the first link is different from the second link.

Based on the foregoing technical solutions, when the first time gap is measured in slots, to prevent the first terminal device from misunderstanding specific gap duration of the first time gap, the first terminal device may determine the SCS referenced by the first time gap.

With reference to the first aspect, in some implementations of the first aspect, that the first terminal device determines that the SCS referenced by the first time gap is the first SCS or the second SCS includes: The first terminal device determines, based on a first parameter, that the SCS referenced by the first time gap is the first SCS or the second SCS, where the first parameter indicates the first SCS or the second SCS, where the first parameter is configured by the network device, the first parameter is determined by the first terminal device and the network device through negotiation, or the first parameter is pre-programmed into the first terminal device.

Based on the foregoing technical solutions, the first terminal device may determine, based on the first parameter, the SCS referenced by the first time gap, and the first parameter may be obtained in different manners, so that flexibility of the solutions can be improved.

With reference to the first aspect, in some implementations of the first aspect, the method further includes: The first terminal device determines a first transmission resource, where the first transmission resource is used to transmit the first information, the first transmission resource includes a first time domain resource and a first frequency domain resource, and the first time domain resource is in the first time unit.

Based on the foregoing technical solutions, the first terminal device may determine the first transmission resource for transmitting the first information, so as to send the first information to the second terminal device through the second link. This prevents the first terminal device from directly feeding back HARQ-ACK information of downlink data to the network device, thereby reducing uplink communication overheads of the first terminal device.

With reference to the first aspect, in some implementations of the first aspect, the first transmission resource is a physical sidelink shared channel (physical sidelink shared channel, PSSCH), and that the first terminal device determines the first transmission resource includes: The first terminal device receives the first control information from the network device, where the first control information includes second information, and the second information indicates the first time domain resource and the first frequency domain resource; and the first terminal device determines the first transmission resource based on the second information.

Alternatively, the first terminal device determines the first time domain resource and the first frequency domain resource based on third configuration information, where the third configuration information is information received by the first terminal device from the network device before the first terminal device receives the first downlink data.

Based on the foregoing technical solutions, when the first transmission resource is the PSSCH, the network device may indicate the first transmission resource to the first terminal device in a dynamic indication (for example, delivering the first control information) or semi-static configuration (for example, delivering the third configuration information) manner, so that the first terminal device can learn of the first transmission resource in different manners, thereby improving flexibility of the solutions.

With reference to the first aspect, in some implementations of the first aspect, the second information includes a first field and a second field, the first field indicates time resource assignment, and the second field indicates frequency resource assignment.

Based on the foregoing technical solutions, when the network device indicates the first transmission resource in a dynamic indication manner, an existing field may be reused to indicate the first transmission resource, thereby improving backward compatibility of the solutions.

With reference to the first aspect, in some implementations of the first aspect, the third configuration information includes information indicating a quantity of subchannels, information indicating a subchannel size, information indicating a start resource block of a subchannel, information indicating a start symbol of the first time domain resource in the first time unit, and information indicating a quantity of symbols occupied by the first time domain resource.

Based on the foregoing technical solutions, when the network device configures the first transmission resource in a semi-static manner, an existing resource preconfiguration manner may be reused, thereby improving backward compatibility of the solutions.

With reference to the first aspect, in some implementations of the first aspect, the first information is a media access control control element (media access control-Control element, MAC CE).

With reference to the first aspect, in some implementations of the first aspect, the first frequency domain resource is a resource block occupied by a physical sidelink feedback channel (physical sidelink feedback channel, PSFCH), and that the first terminal device determines the first transmission resource includes: The first terminal device receives the first control information from the network device, where the first control information includes third information, and the third information indicates the first frequency domain resource; and the first terminal device determines the first frequency domain resource based on the third information.

Alternatively,

the first terminal device determines a first quantity M of downlink data in a first downlink data set, where the first downlink data is one of the M pieces of downlink data, M pieces of HARQ-ACK information corresponding to the M pieces of downlink data are all transmitted on the PSFCH, and M is a positive integer; the first terminal device determines a second resource block quantity based on the first quantity and a first resource block quantity, where the first resource block quantity is a quantity of resource blocks included in the PSFCH, and the second resource block quantity is a quantity of resource blocks included in the first frequency domain resource; and the first terminal device determines a position of the second resource block quantity in the first resource block quantity based on a position of the first downlink data in the downlink data set.

Based on the foregoing technical solutions, when the first transmission resource is the PSFCH, the first terminal device may determine, based on an indication (for example, receiving the first control information) of the network device, a resource block required for transmitting the HARQ-ACK information of the first downlink data; or may determine, based on a HARQ-ACK information transmission opportunity set of the downlink data (for example, the first quantity M of downlink data in the first downlink data set), a resource block required for transmitting the HARQ-ACK information of the first downlink data, so that the first terminal device can determine the transmission resource in different manners based on an actual situation, thereby improving flexibility of the solutions.

With reference to the first aspect, in some implementations of the first aspect, the first transmission resource is used to transmit HARQ-ACK information of downlink data.

Based on the foregoing technical solutions, the first transmission resource may be a resource dedicated to transmitting HARQ-ACK information of downlink data, that is, a transmission resource may be separately configured for transmitting the HARQ-ACK information of the downlink data, to avoid confusion with a resource of another function.

When the first transmission resource is a resource dedicated to transmitting the HARQ-ACK information of the downlink data, M, the first resource block quantity, and the second resource block quantity satisfy the following relationship:

$$N = \left\lfloor \frac{K}{M} \right\rfloor$$

where N represents the second resource block quantity, K represents the first resource block quantity, $\lfloor \ \rfloor$ represents a floor operation, and N resource blocks corresponding to an $m^{th}$ piece of downlink data in the M pieces of downlink data are resource blocks whose indices are (m-1)*N to m*N-1 in K resource blocks;
or
M, the first resource block quantity, and the second resource block quantity satisfy the following relationship:

$$N = \frac{K}{M}$$

where M is divisible by K, and N resource blocks corresponding to an $m^{th}$ piece of downlink data in the M pieces of downlink data are resource blocks whose indices are (m-1)*N to m*N-1 in K resource blocks;
or
if M1>0, when m is any integer from 1 to M1, N resource blocks corresponding to an $m^{th}$ piece of downlink data in the M pieces of downlink data are resource blocks whose indices are (m-1)*K1 to m*K1-1 in K resource blocks, or when m is any integer from M1 to M, N resource blocks corresponding to an $m^{th}$ piece of downlink data in the M pieces of downlink data are an [M1*K1+(m-M1-1)*K2]$^{th}$ resource block to an [M1*K1+(m-M1-1)*K2+K2-1]$^{th}$ resource block in K resource blocks; or
if M1=0, N resource blocks corresponding to an $m^{th}$ piece of downlink data in the M pieces of downlink data are an [M1*K1+(m-M1-1)*K2]$^{th}$ resource block to an [M1*K1+(m-M1-1)*K2+K2-1]$^{th}$ resource block in K resource blocks, where

K1 is $\left\lceil \dfrac{K}{M} \right\rceil$, K2 is $\left\lfloor \dfrac{K}{M} \right\rfloor$, M1 is a remainder of $\dfrac{K}{M}$, and || represents a ceiling operation.

With reference to the first aspect, in some implementations of the first aspect, the first transmission resource is used to transmit HARQ-ACK information of downlink data and HARQ-ACK information of sidelink data.

Based on the foregoing technical solution, the first transmission resource may be used to transmit the HARQ-ACK information of the downlink data and the HARQ-ACK information of the sidelink data. In other words, a configured transmission resource may be shared for the HARQ-ACK information of the downlink data and the HARQ-ACK information of the sidelink data.

When the first transmission resource is used to transmit the HARQ-ACK information of the downlink data and the HARQ-ACK information of the sidelink data, M, the first resource block quantity, the second resource block quantity, and a second quantity satisfy the following relationship:

$$N = \left\lfloor \frac{K}{M+A} \right\rfloor$$

where N represents the second resource block quantity, K represents the first resource block quantity, A represents the second quantity, the second quantity is a quantity of HARQ-ACK information that is of the sidelink data and that is transmitted on the PSFCH, ⌊⌋ represents a floor operation, and N resource blocks corresponding to an $m^{th}$ piece of downlink data in the M pieces of downlink data and A pieces of sidelink data are resource blocks whose indices are (m-1)*N to m*N-1 in K resource blocks;

or

M, the first resource block quantity, the second resource block quantity, and a second quantity satisfy the following relationship:

$$N = \frac{K}{M + A}$$

where M+A is divisible by K, and N resource blocks corresponding to an $m^{th}$ piece of downlink data in the M pieces of downlink data and A pieces of sidelink data are resource blocks whose indices are (m-1)*N to m*N-1 in K resource blocks;

or

if M1>0, when m is any integer from 1 to M1, N resource blocks corresponding to an $m^{th}$ piece of downlink data in the M pieces of downlink data and A pieces of sidelink data are resource blocks whose indices are (m-1)*K1 to m*K1-1 in K resource blocks, or when m is any integer from M1 to M, N resource blocks corresponding to an $m^{th}$ piece of downlink data in the M pieces of downlink data are an $[M1*K1+(m-M1-1)*K2]^{th}$ resource block to an $[M1*K1+(m-M1-1)*K2+K2-1]^{th}$ resource block in K resource blocks; or

if M1=0, N resource blocks corresponding to an $m^{th}$ piece of downlink data in the M pieces of downlink data and A pieces of sidelink data are an $[M1*K1+(m-M1-1)*K2]^{th}$ resource block to an $[M1*K1+(m-M1-1)*K2+K2-1]^{th}$ resource block in K resource blocks, where

K1 is $\left\lceil \dfrac{K}{M+A} \right\rceil$, K2 is $\left\lfloor \dfrac{K}{M+A} \right\rfloor$, M1 is a remainder of $\dfrac{K}{M+A}$, and | | represents a ceiling operation.

With reference to the first aspect, in some implementations of the first aspect, that the first terminal device determines the first quantity includes: The first terminal device receives fourth information from the network device, where the fourth information indicates the first quantity; or the first terminal device determines the first quantity based on at least one of the following information: the time gap set, time domain resource allocation TDRA of the first link, the subcarrier spacing of the first link, the subcarrier spacing of the second link, a period of the first transmission resource, or the first time unit, where the first time unit is one time gap in the time gap set.

Based on the foregoing technical solutions, the first terminal device may determine a value of the first quantity in different manners, thereby improving flexibility of the solutions.

With reference to the first aspect, in some implementations of the first aspect, when the first terminal device does not receive second downlink data in the downlink data set, the method further includes: The first terminal device does not transmit HARQ-ACK information on a second transmission resource corresponding to the second downlink data, or feeds back a negative acknowledgement (Negative Acknowledgement, NACK) on the second transmission resource.

Based on the foregoing technical solutions, for received downlink data, the first terminal device may not transmit HARQ-ACK information, or may transmit and feed back a negative acknowledgement NACK.

With reference to the first aspect, in some implementations of the first aspect, when the first terminal device is one of a plurality of terminal devices that feed back HARQ-ACK information through the second terminal device, the method further includes: The first terminal device sends the first HARQ-ACK information to the second terminal device on the first transmission resource in a code division multiplexing manner.

Based on the foregoing technical solutions, in a scenario in which a plurality of first terminal devices transmit HARQ-ACK information by using a transmission resource on a same frequency band, resource multiplexing may be performed in a code division multiplexing manner, to avoid interference between different terminal devices.

With reference to the first aspect, in some implementations of the first aspect, before receiving the first downlink data from the network device, the method further includes: The first terminal device receives fourth configuration information from the network device, where the fourth configuration information is used to configure R resource pools, the first transmission resource is a resource in one of the R resource pools, and R is a positive integer.

With reference to the first aspect, in some implementations of the first aspect, the first downlink data includes a physical downlink shared channel PDSCH, the first link is a link for communication based on a first communication interface, the second link is a link for communication based on a second communication interface, the first communication interface is a first Uu interface (or a cellular network interface), the second communication interface is a PC5 interface (or a sidelink interface), the first terminal device includes an extended reality XR device, and the second terminal device includes a mobile terminal.

According to a second aspect, a communication method is provided. The method may be performed by a network device, or may be performed by a component (for example, a chip or a circuit) of the network device. This is not limited in this application. For ease of description, the following uses an example in which the network device performs the method for description.

The communication method includes: The network device sends first downlink data to a first terminal device through a first link; and the network device receives fifth information from a second terminal device through a third link, where the fifth information includes first hybrid automatic repeat request acknowledgement HARQ-ACK information, and the first HARQ-ACK information indicates a first decoding result corresponding to the first downlink data, where the first link is a transmission link between the first terminal device and the network device, and the third link is a transmission link between the second terminal device and the network device.

With reference to the second aspect, in some implementations of the second aspect, the method further includes: The network device configures a first transmission resource for the first terminal device through the first link, where the first transmission resource is used by the first terminal device to send first information to the second terminal device through a second link, the first information includes the first HARQ-ACK information, and the second link is a transmission link between the first terminal device and the second terminal device.

With reference to the second aspect, in some implementations of the second aspect, the first transmission resource includes a first time domain resource and a first frequency domain resource, the first time domain resource is in a first time unit, and the method further includes: The network device sends first control information to the first terminal device, where the first control information indicates a first time gap; or before sending the first downlink data to the first terminal device, the network device sends first configuration information to the first terminal device, where the first configuration information indicates a first time gap, where the first time gap is less than or equal to a time gap between the first time unit and a second time unit, the second time unit is a time unit in which the first terminal device receives the first downlink data or a time unit in which the first terminal device receives the first control information, and the first control information is further used to schedule the first downlink data.

With reference to the second aspect, in some implementations of the second aspect, before the network device sends the first control information to the first terminal device, the method further includes: The network device sends second configuration information to the first terminal device, where the second configuration information is used to configure a time gap set, and the first time gap is one time gap in the time gap set.

With reference to the second aspect, in some implementations of the second aspect, when the first time gap is measured in slots, the method further includes: The network device sends a first parameter to the first terminal device, where the first parameter indicates that a subcarrier spacing SCS referenced by the first time gap is a first SCS or a second SCS, the first SCS is an SCS corresponding to the first link, the second SCS is an SCS corresponding to the second link, and the first link is different from the second link.

With reference to the second aspect, in some implementations of the second aspect, the first transmission resource is a physical sidelink shared channel PSSCH, and the method further includes: The network device sends the first control information to the first terminal device, where the first control information includes second information, and the second information indicates the first time domain resource and the first frequency domain resource; or before sending the first downlink data to the first terminal device, the network device sends third configuration information to the first terminal device, where the third configuration information indicates the first time domain resource and the first frequency domain resource.

With reference to the second aspect, in some implementations of the second aspect, the second information includes a first field and a second field, the first field indicates time resource assignment, and the second field indicates frequency resource assignment.

With reference to the second aspect, in some implementations of the second aspect, the third configuration information includes information indicating a quantity of subchannels, information indicating a subchannel size, information indicating a start resource block of a subchannel, information indicating a start symbol of the first time domain resource in the first time unit, and information indicating a quantity of symbols occupied by the first time domain resource.

With reference to the second aspect, in some implementations of the second aspect, the first information is a media access control control element MAC CE.

With reference to the second aspect, in some implementations of the second aspect, the first frequency domain resource is a resource block occupied by a physical sidelink feedback channel PSFCH, and the method further includes: The network device sends the first control information to the first terminal device, where the first control information includes third information, and the third information indicates the first frequency domain resource; or the network device sends fourth information to the first terminal device, where the fourth information indicates a first quantity M of downlink data in a first downlink data set, and the first quantity is used to determine the first frequency domain resource, where the first downlink data is one of the M pieces of downlink data, M pieces of HARQ-ACK information corresponding to the M pieces of downlink data are all transmitted on the PSFCH, and M is a positive integer.

With reference to the second aspect, in some implementations of the second aspect, the first transmission resource is a resource used to transmit HARQ-ACK information of downlink data. Specifically, for a relationship between M, the first resource block quantity, and the second resource block quantity, refer to the descriptions in the first aspect. Details are not described herein again.

With reference to the second aspect, in some implementations of the second aspect, the first transmission resource is used to transmit HARQ-ACK information of downlink data and HARQ-ACK information of sidelink data. Specifically, for a relationship between M, the first resource block quantity, the second resource block quantity, and a second quantity, refer to the descriptions in the first aspect. Details are not described herein again.

With reference to the second aspect, in some implementations of the second aspect, the method further includes: The network device sends fourth configuration information to the first terminal device, where the fourth configuration information is used to configure R resource pools, the first transmission resource is a resource in one of the R resource pools, and R is a positive integer.

With reference to the second aspect, in some implementations of the second aspect, the first downlink data includes a physical downlink shared channel PDSCH, the first link is a link for communication based on a first communication interface, the second link is a link for communication based on a second communication interface, the third link is a link for communication based on a third communication interface, the first communication interface is a first Uu interface, the second communication interface is a PC5 interface, and the third communication interface is a second Uu interface.

For technical effects of the method shown in the second aspect and the possible designs of the second aspect, refer to the technical effects in the first aspect and the possible designs of the first aspect.

According to a third aspect, a terminal device is provided. The terminal device is configured to perform any one of the first aspect and the implementations of the first aspect. Specifically, the terminal device includes a processor and a memory. The memory is configured to store a computer program. The processor is configured to invoke the computer program from the memory and run the computer program, so that the terminal device performs any one of the first aspect and the implementations of the first aspect.

According to a fourth aspect, a network device is provided. The network device is configured to perform any one of the second aspect and the implementations of the second aspect. Specifically, the network device includes a processor and a memory. The memory is configured to store a computer program. The processor is configured to invoke the computer program from the memory and run the computer program, so that the network device performs any one of the second aspect and the implementations of the second aspect.

According to a fifth aspect, a communication apparatus is provided. The communication apparatus is configured to perform the method provided in any one of the first aspect and the second aspect and the implementations of the first aspect and the second aspect. Specifically, the communication apparatus may include units and/or modules (for example, a processing unit and a transceiver unit) configured to perform the method provided in any one of the first aspect and the second aspect and the implementations of the first aspect and the second aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, this application provides a processor, configured to perform the method provided in the first aspect and the second aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable storage medium stores a computer program. When the computer program runs on a communication apparatus, the communication apparatus is enabled to perform the method according to any one of the implementations of the first aspect and the second aspect.

According to an eighth aspect, a computer program product including instructions is provided. When the computer program product runs on a computer, the computer is enabled to perform the method according to any one of the implementations of the first aspect and the second aspect.

According to a ninth aspect, a chip is provided. The chip includes a processor and a communication interface. The processor reads instructions through the communication interface, to perform the method according to any one of the implementations of the first aspect and the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the implementations of the first aspect and the second aspect.

According to a tenth aspect, a communication system is provided, including the terminal device in the third aspect and the network device in the fourth aspect.

## BRIEF DESCRIPTION OF DRAWINGS

FIG. 1 is a diagram of a communication architecture according to an embodiment of this application;

FIG. 2 is a diagram of a scenario in which XR glasses communicate with a network device through a mobile phone according to an embodiment of this application.

FIG. 3 is a diagram of a structure of a slot according to an embodiment of this application;

FIG. 4 is a diagram of a time relationship between a PSSCH and a PSFCH according to an embodiment of this application;

FIG. 5 is a diagram of a frequency domain relationship between HARQ-ACK information of a PSSCH and a PSFCH according to an embodiment of this application;

FIG. 6 is a diagram of code division multiplexing (code division multiplexing, CDM) according to an embodiment of this application;

FIG. 7 is a schematic flowchart of a communication method according to an embodiment of this application;

FIG. 8 is a schematic flowchart of another communication method according to an embodiment of this application;

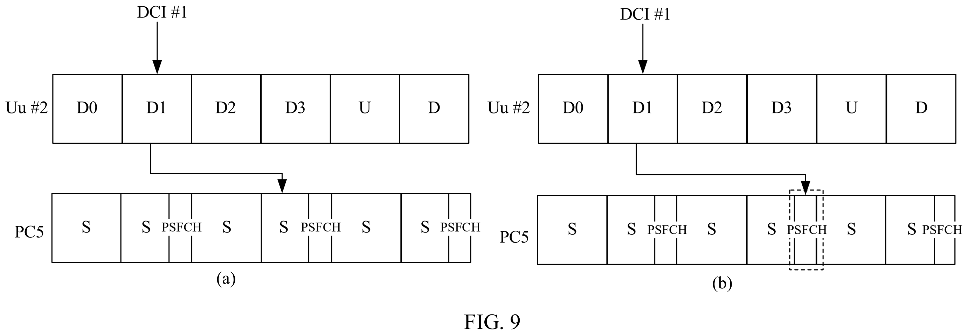

(a) and (b) in FIG. 9 are a diagram of a first time gap according to this application;

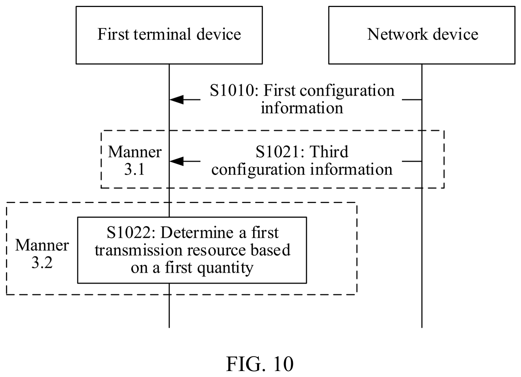

FIG. 10 is a schematic flowchart of another communication method according to an embodiment of this application;

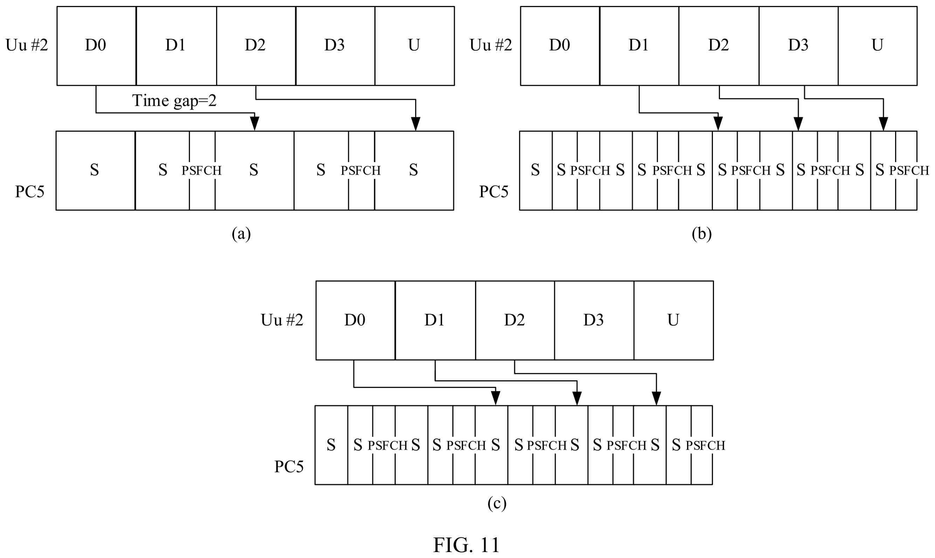

(a) to (c) in FIG. 11 are a diagram of another first time gap according to an embodiment of this application;

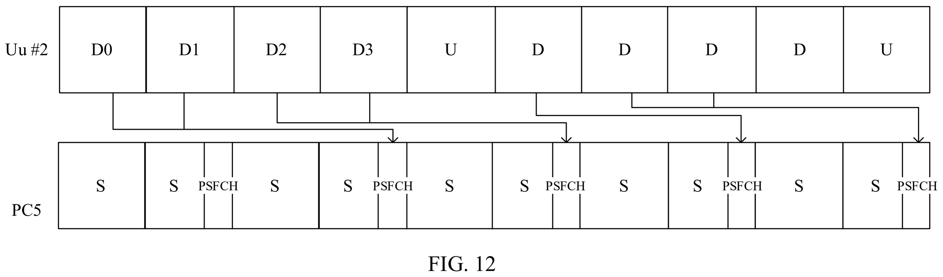

FIG. 12 is a diagram of another first time gap according to an embodiment of this application;

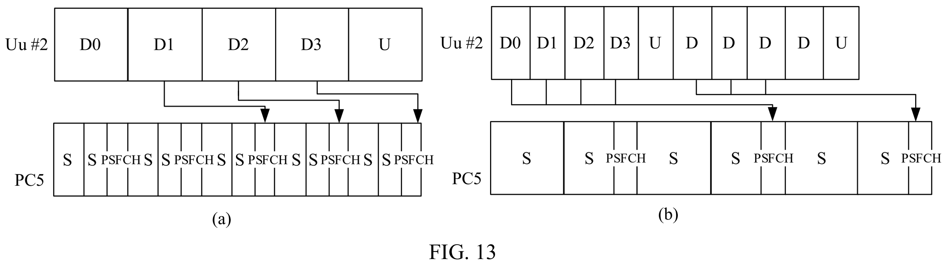

(a) and (b) in FIG. 13 are a diagram of another first time gap according to an embodiment of this application;

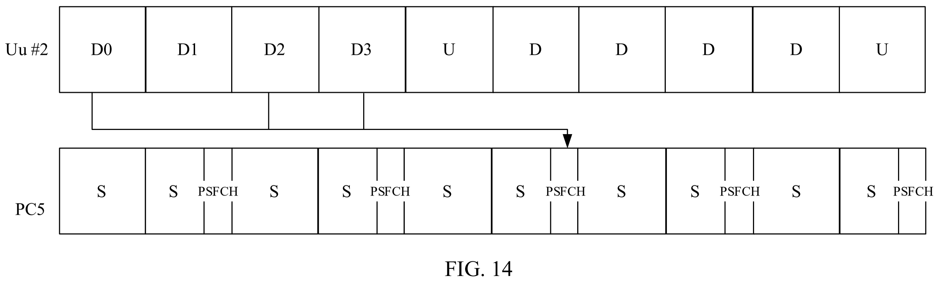

FIG. 14 is a diagram of a PDSCH transmission opportunity set according to an embodiment of this application;

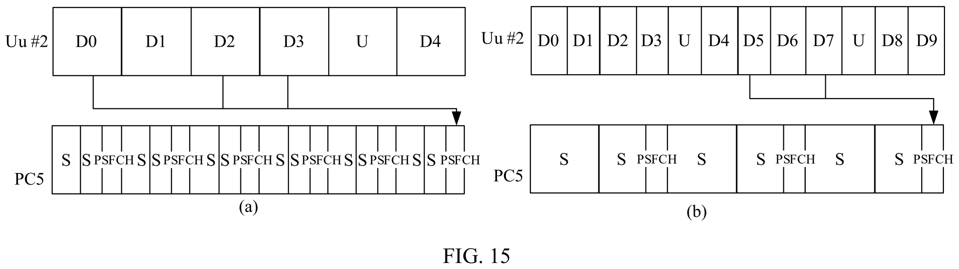

(a) and (b) in FIG. 15 are a diagram of another PDSCH transmission opportunity set according to an embodiment of this application;

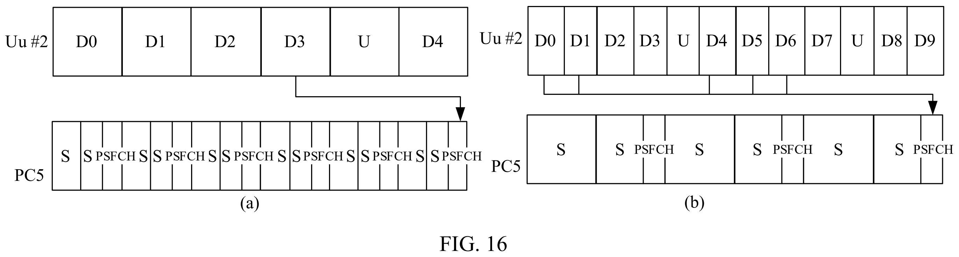

(a) and (b) in FIG. 16 are a diagram of another PDSCH transmission opportunity set according to an embodiment of this application;

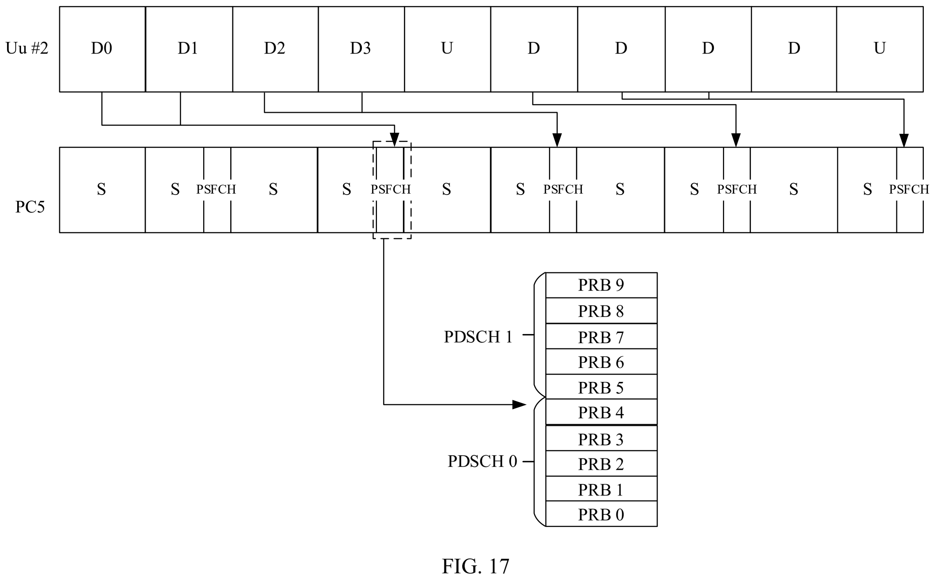

FIG. 17 is a diagram of allocating a PRB of a PSFCH according to an embodiment of this application;

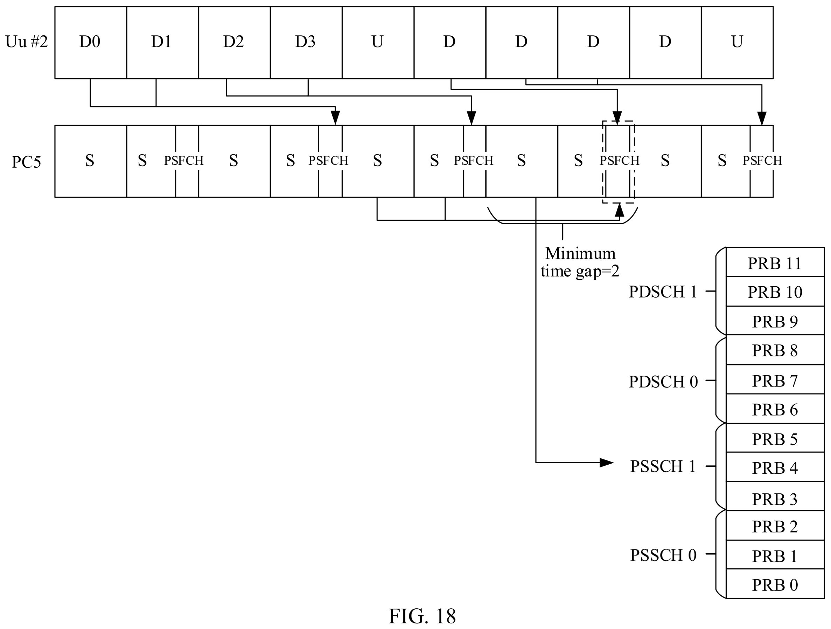

FIG. 18 is another diagram of allocating a PRB of a PSFCH according to an embodiment of this application;

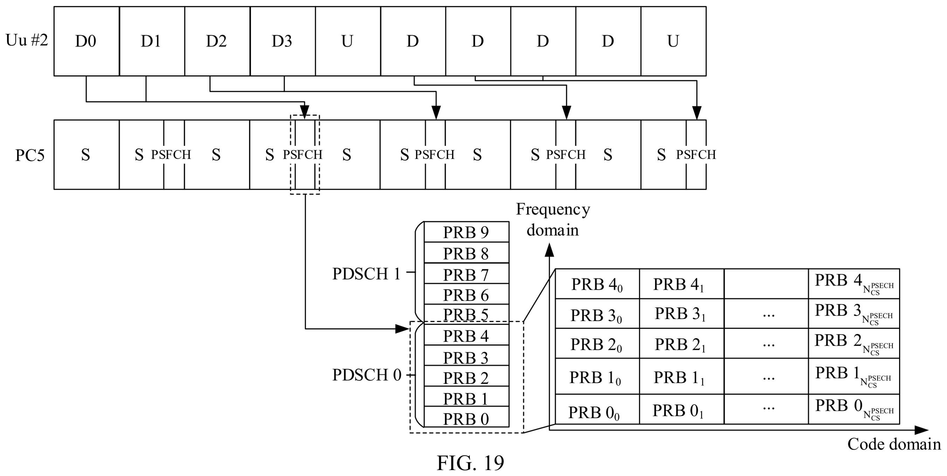

FIG. 19 is another diagram of allocating a PRB of a PSFCH according to an embodiment of this application;

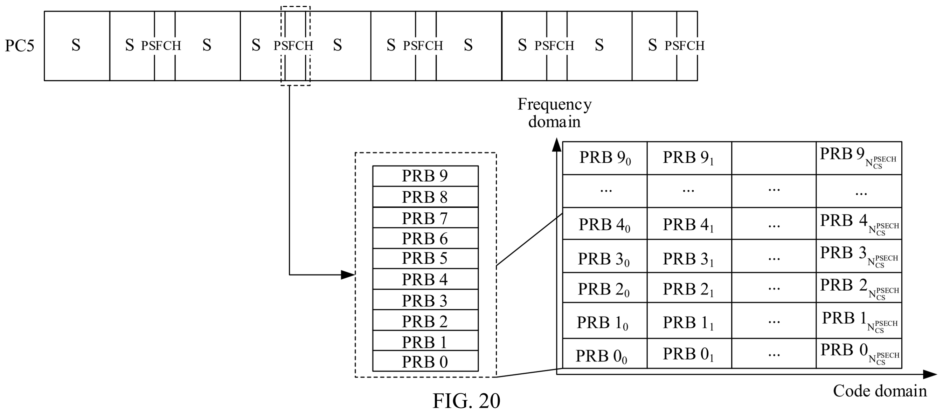

FIG. 20 is another diagram of allocating a PRB of a PSFCH according to an embodiment of this application;

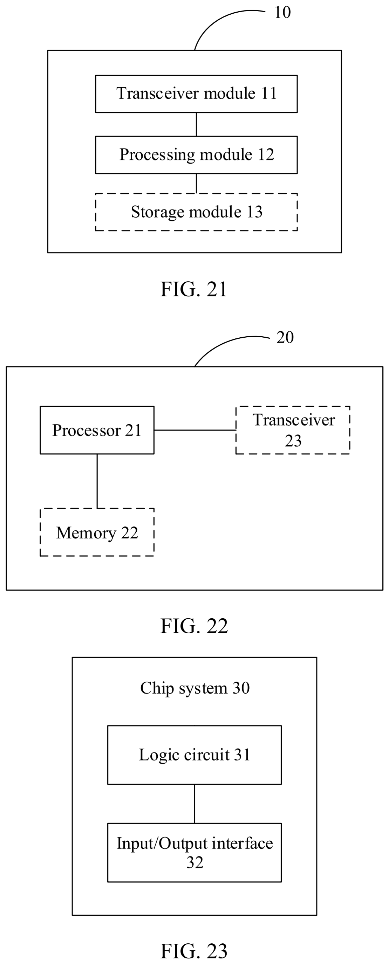

FIG. 21 is a block diagram of a communication apparatus according to an embodiment of this application;

FIG. 22 is a diagram of another communication apparatus according to an embodiment of this application; and

FIG. 23 is a diagram of a chip system according to an embodiment of this application.

## DESCRIPTION OF EMBODIMENTS

The following describes technical solutions in embodiments of this application in detail with reference to the accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system.

A real-time broadband communication (Real-time broadband communication, RTBC) scenario in the 5G new vision aims to support a large bandwidth and a low interaction latency. A goal is to improve a bandwidth under a given latency and a specific reliability requirement, and create immersive experience during interaction between people and a virtual world. An XR service with ultra-high bandwidth and ultra-low latency requirements poses more severe challenges to current 5G. The XR service includes a plurality of types of data, such as videos, audio, and other control signals. Video data usually includes several ultra-high-definition images. Each image undergoes compression coding, for example, high efficiency video coding (High efficiency video coding, HEVC). After the coding, a large data block is generated. A higher definition of a video usually indicates a larger data block.

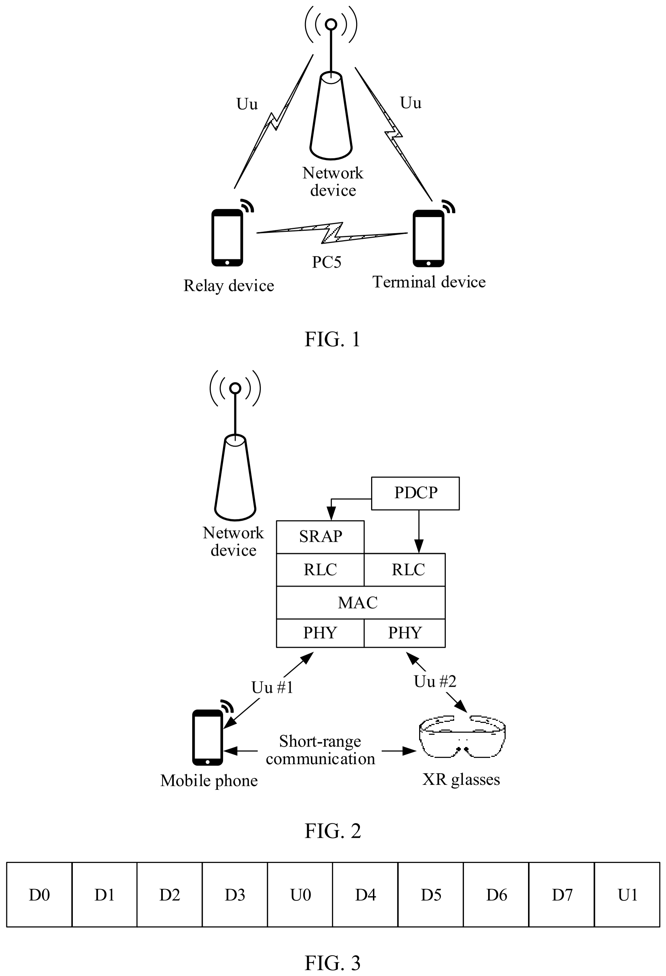

In a scenario in which an XR device is connected to a base station, the XR device needs to communicate with a server through the base station, that is, the XR device sends uplink data, for example, pose (pose) information of the XR device, audio data, and video data captured by a camera of the XR device, to the server through the base station. After receiving the data, the server generates corresponding downlink data, for example, a video to be displayed on the XR device, and sends the downlink data to the XR device through the base station. In cellular communication, because a base station is usually far away from a terminal device, to ensure uplink transmission communication quality, the terminal device needs to perform power amplification on a data signal before sending data. As a result, power consumption overheads of uplink transmission are relatively high. For an XR device, lightweight causes a limited battery capacity, and finally affects a battery life of the XR device. Therefore, power consumption reduction is a tough direction for improving experience of the XR device currently. An architecture for reducing power consumption overheads of uplink communication is proposed. To be specific, an XR device may send uplink information to a base station through a terminal device. For ease of understanding, the following briefly describes, with reference to FIG. 1 and FIG. 2, a communication architecture for reducing power consumption overheads of uplink communication in this application.

FIG. 1 is a diagram of a communication architecture according to an embodiment of this application. The communication architecture includes a network device, a relay device, and a terminal device.

The terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), a terminal device in a future internet of vehicles, or the like. This is not limited in embodiments of this application.

For example, in embodiments of this application, the wearable device may also be referred to as a wearable intelligent device or the like, and is a general term of wearable devices that are intelligently designed and developed for daily wear by using a wearable technology, such as glasses, gloves, watches, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, the wearable intelligent device includes a full-featured device that may implement complete or partial functions without depending on a smartphone, for example, a smartwatch or smart glasses. In addition, the device may alternatively be a portable device that is dedicated to only one type of application function and needs to be used together with another device such as a smartphone, for example, various smart bands or smart jewelry for monitoring physical signs.

In addition, in embodiments of this application, the terminal device may alternatively be a terminal device in an IoT system. IoT is an important part of future information technology development. A main technical feature of IoT is that an article is connected to a network by using a communication technology, to implement an intelligent network of man-machine interconnection and interconnection between things. In embodiments of this application, the IoT technology can implement massive connections, deep coverage, and terminal power saving by using, for example, a narrow band (narrow band, NB) technology.

In addition, in embodiments of this application, the terminal device may alternatively include a sensor. Main functions include collecting data (some terminal devices), receiving control information and downlink data from a network device, sending an electromagnetic wave, and transmitting uplink data to the network device.

The relay device (relay equipment) in embodiments of this application may be a terminal device. Refer to the foregoing descriptions of the terminal device. In other words, the relay device and the terminal device in this application may be two different terminal devices, and the terminal devices may directly communicate with each other. For example, direct communication between the terminal devices may be implemented by using a device-to-device (device-to-device, D2D) technology. The relay device may relay (relay) information between a terminal device and a network device.

The network device in embodiments of this application may be any communication device that has wireless sending and receiving functions and that is configured to communicate with a terminal device. The device includes but is not limited to: an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseBand unit, BBU), or an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, or may be a gNB or a transmission point (TRP or TP) in a 5G system such as an NR system, or one antenna panel or a group of antenna panels (including a plurality of antenna panels) of a base station in a 5G system, or may be a network node that forms a gNB or a transmission point, for example, a baseband unit (BBU) or a distributed unit (distributed unit, DU).

The network device and the terminal device may be deployed on land, including an indoor or outdoor device, a handheld device, or a vehicle-mounted device; or may be deployed on a water surface; or may be deployed on a plane, a balloon, or a satellite in the air. A scenario in which the network device and the terminal device are located is not limited in embodiments of this application.

In embodiments of this application, the terminal device or the network device includes a hardware layer, an operating system layer running above the hardware layer, and an application layer running above the operating system layer. The hardware layer includes hardware such as a central processing unit, a memory management unit (memory management unit, MMU), and memory (also referred to as main memory). The operating system may be any one or more computer operating systems that implement service processing through a process (process), for example, a Linux® operating system, a Unix® operating system, an Android® operating system, an iOS® operating system, or a Windows® operating system. The application layer includes applications such as a browser, an address book, word processing software, and instant communication software.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium includes but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media configured to store information. The term "machine-readable storage medium" may include but is not limited to a radio channel, and various other media that can store, include, and/or carry instructions and/or data.

It should be understood that FIG. 1 is merely a simplified diagram of an example for ease of understanding. The communication system 100 may further include another network device or may further include another terminal device (not shown in FIG. 1). For example, the communication system 100 may further include a core network device. An access network device provides a radio access connection for the terminal device, and may send data to the terminal device or receive data sent by the terminal device. In addition, the access network device is also connected to the core network device, and may forward, to a core network, the data received from the terminal device, or receive, from the core network, data that needs to be sent to the terminal device.

For example, an example in which the relay device shown in FIG. 1 is a mobile phone and the terminal device is XR glasses is used to describe how to reduce power consumption overheads of uplink communication of the XR glasses, as shown in FIG. 2. FIG. 2 is a diagram of a scenario in which XR glasses communicate with a network device through a mobile phone according to an embodiment of this application.

It can be learned from FIG. 2 that the network device and the XR glasses may communicate with each other in a multipath manner. The multipath includes: (1) The XR glasses directly communicate with the network device through a communication interface (for example, Uu #2). (2) The XR glasses communicate with the mobile phone via a short range (for example, a sidelink (sidelink, SL)), and the mobile phone communicates with the network device through a communication interface (for example, Uu #1).

Specifically, a packet data convergence protocol (packet data convergence protocol, PDCP) layer of the network device is divided into two bearers. One bearer (referred to as a bearer #1 below) is used to establish a link that is from the XR glasses to the network device and on which the mobile phone is used as a relay (relay), and the other bearer (referred to as a bearer #2 below) is a direct link between the XR glasses and the network device.

With respect to the bearer #1, for downlink transmission (that is, transmission from the network device to the XR glasses), the bearer #1 transfers data with an added PDCP header to a sidelink relay adaptation protocol (sidelink relay adaptation protocol, SRAP) layer. After adding a corresponding header, the SRAP layer delivers the data to a corresponding radio link control (radio link control, RLC) layer. The data is forwarded to a media access control (media access control, MAC) layer after a header is added. Then, the data is transferred to the mobile phone through a physical (physical, PHY) layer (for example, PHY #1 shown in FIG. 2). The mobile phone then transfers the data to the XR glasses through short-range communication (for example, an SL).

Similarly, with respect to the bearer #1, for uplink, the XR glasses transmit data from an application layer to the mobile phone through the SL, and then the mobile phone transmits the data to the network device. A process thereof is reverse to the foregoing downlink transmission process, and details are not described again.

With respect to the bearer #2, for downlink transmission (that is, transmission from the network device to the XR glasses), because relay via the mobile phone is not needed, there is no SRAP layer in a protocol stack of the bearer #2. The PDCP delivers data to an RLC, and then the MAC transmits the data to the XR glasses through a physical layer (for example, PHY #2 shown in FIG. 2).

Similarly, with respect to the bearer #2, for uplink, the XR glasses directly transmit data from an application layer to the network device.

Uu #1 is a physical connection between the mobile phone and a base station, Uu #2 is a physical connection between the glasses and the base station, and Uu #1 and Uu #2 may be in a same frequency band, or may be in different frequency bands. Further, the mobile phone and the XR glasses perform SL connection through a PC5 interface, and a frequency band of PC5 may be the same as or different from that of Uu #1 or Uu #2.

To reduce uplink transmission power consumption of the XR glasses, for uplink data (for example, pose (pose) information of the XR device, audio data, and video data captured by a camera of the XR device), the XR glasses may transfer the data to the mobile phone, and then the mobile phone transfers the data through Uu #1. Because the XR glasses and the mobile phone usually communicate with each other within a short range, a distance from the XR glasses to the mobile phone is far less than a distance from the XR glasses to the base station. Therefore, uplink transmission power consumption of the glasses is effectively reduced. For downlink communication, as shown in FIG. 2, data from a server may be sent to the XR glasses through two links (for example, a link #1 for transmission via Uu #1 and PC 5, and a link #2 for transmission via Uu #2). When Uu #1 and Uu #2 are in different frequency bands, using the two links is equivalent to increasing a link bandwidth, and therefore a transmission rate can be effectively improved.

For ease of understanding embodiments of this application, some basic concepts in this application are briefly described. It should be understood that the basic concepts described below are described by using basic concepts specified in an NR protocol as an example, but embodiments of this application are not limited to being applied to only an NR system. Therefore, standard names appearing when the NR system is used as an example for description are all functional descriptions, and specific names are not limited, indicate only functions of a device, and may be correspondingly extended to another future system.

1. HARQ-ACK information feedback in a cellular network: In the cellular network, after a network device schedules a physical downlink shared channel (Physical downlink shared channel, PDSCH) for a terminal device by using downlink control information (downlink control information, DCI), the terminal device determines, based on indication information in the DCI, a physical uplink control channel (physical uplink control channel, PUCCH) that carries HARQ-ACK information of the PDSCH.

Specifically, in addition to indicating the PDSCH, the DCI also carries a field indicating the PUCCH that carries the HARQ-ACK information corresponding to the PDSCH. For example, a k1 value, that is, an offset time (offset time) between the PDSCH and the PUCCH, is indicated by using a PDSCH HARQ-ACK information timing indicator (PDSCH-to-HARQ_feedback timing indicator) field. It should be noted that the offset time indicated in the DCI is an index, and the index points to one of a group of offset times.

Specifically, the network device configures a group of k1 values for the terminal device by using higher layer signaling, for example, a radio resource control (radio resource control, RRC) message. When scheduling the PDSCH by using the DCI, the network device indicates one k1 in the DCI, where the k1 is one of the foregoing group of k1 values. In addition, the DCI also indicates a PUCCH resource carrying the HARQ-ACK information. For example, the DCI indicates, by using PUCCH resource indication information (PUCCH resource indicator), an index of the used PUCCH resource.

For ease of understanding, feedback of the HARQ-ACK information of the PDSCH is described in detail with reference to FIG. 3. A carrier whose time division duplex (time division duplex, TDD) configuration is 4:1 can be seen in FIG. 3. To be specific, each TDD cycle has four downlink slots (for example, D0, D1, D2, and D3 in a TDD cycle and D4, D5, D6, and D7 in another TDD cycle shown in FIG. 3) and one uplink slot (for example, U0 in a TDD cycle and U1 in another TDD cycle shown in FIG. 3).

The network device configures a group of k1 values or a group of PDSCH reception candidates (candidate PDSCH reception) for the terminal device by using indication information (for example, dl-DataToUL-ACK-r16) in a PUCCH configuration (PUCCH-Config) of higher layer signaling such as an RRC message, where a quantity usually does not exceed 8. For example, dl-DataToUL-ACK-r16={2, 3, 4, 5, 6, 7}. In this case, for any uplink slot, for example, U1 in FIG. 3, HARQ-ACK information of {2, 3, 4, 5, 6, 7} previous slots that can be used to transmit a PDSCH may all be fed back in U1.

Specifically, U1 in FIG. 3 is still used as an example. Before UI, the second slot is D6, the third slot is D5, the fourth slot is D4, the fifth slot is U0 (which cannot be used to transmit a PDSCH, and therefore, a HARQ codebook does not need to be calculated), the sixth slot is D3, and the seventh slot is D2. HARQ-ACK information of PDSCHs scheduled in D2 to D6 may all be fed back in U1.

For example, the network device schedules a PDSCH in the slot D2 by using DCI, and the DCI further indicates a k1 index. For example, if PDSCH-to-HARQ_feedback timing indicator='000' (because dl-DataToUL-ACK-r16 includes six values, this indication field includes ceil(log2(quantity in dl-DataToUL-ACK-r16))=3 bits), it indicates that the first value, namely, 2, in dl-DataToUL-ACK-r16 is indicated. In other words, a HARQ of the PDSCH in D2 is fed back in U0. If PDSCH-to-HARQ_feedback timing indicator='101', that is, the sixth value, namely, 7, HARQ-ACK information of the PDSCH in D2 is fed back in U1.

2. PDSCH transmission opportunity: The PDSCH transmission opportunity in this application means a quantity of HARQ-ACK information that is of a PDSCH and that can be transmitted on a time-frequency resource, and a plurality of PDSCH transmission opportunities may be referred to as a PDSCH transmission opportunity set. For example, if a quantity of HARQ-ACK information that is of a PDSCH and that can be transmitted on a time-frequency resource #1 (for example, a PSSCH, a PSFCH, or a PUCCH) is 2, a PDSCH transmission opportunity is 2.

3. Semi-static codebook: HARQ-ACK information feedback on a PUCCH is usually classified into two forms: a semi-static codebook (also referred to as a type 1 (typel)) and a dynamic codebook (type 2 (type2)).

For a quantity of bits of a semi-static codebook of a PUCCH, all PDSCH transmission opportunities that can correspond to the PUCCH need to be considered. As shown in FIG. 3, reception candidates of PDSCHs transmitted in D2 to D6 need to be considered for a PUCCH codebook in U1. It should be understood that because mini-slot (mini-slot) scheduling exists (for example, one slot includes 14 symbols, each PDSCH occupies only several symbols, and more than one PDSCH transmission opportunity may exist in one slot), a quantity of candidates of the PDSCHs transmitted in D2 to D6 is not necessarily 5, and may be a value greater than 5. For details, refer to a PDSCH-time domain resource allocation list (PDSCH-time domain resource allocation list) configured by using a higher layer message. Table 1 shows a time domain indication manner of time domain resource allocation (time domain resource allocation, TDRA).

Table 1

| Row index (Row index) | DMRS-TypeA-Position | PDSCH mapping type | $k_0$ | S | L |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2, 3 | Type B | 0 | 5 | 7 |
| 9 | 2, 3 | Type B | 0 | 5 | 2 |
| 10 | 2, 3 | Type B | 0 | 9 | 2 |
| 11 | 2, 3 | Type B | 0 | 12 | 2 |
| 12 | 2, 3 | Type A | 0 | 1 | 13 |
| 13 | 2, 3 | Type A | 0 | 1 | 6 |
| 14 | 2, 3 | Type A | 0 | 2 | 4 |
| 15 | 2, 3 | Type B | 0 | 4 | 7 |
| 16 | 2, 3 | Type B | 0 | 8 | 4 |

Specifically, Table 1 includes 16 rows, and each row is further divided into information such as a row index, a type A demodulation reference signal (demodulation reference signal, DMRS) position (dmrs-TypeA-Position), a PDSCH mapping type (PDSCH mapping type), $k_0$, S, and L. DMRS is a demodulation reference channel, and is used by a receive end to evaluate a channel to facilitate signal demodulation. dmrs-TypeA-Position is for a case that a PDSCH mapping type is the type A, where 2 or 3 indicates that a DMRS signal is on the second or third symbol in a slot in which a PDSCH is located. PDSCH mapping type indicates a mapping type of a PDSCH. When the mapping type is the type A, a start symbol of the PDSCH is 0 to 3, that is, any one of the first to fourth symbols. When the mapping type is the type B, a start symbol of the PDSCH is 0 to 12, that is, any one of the first to thirteenth symbols. $k_0$ represents a time offset of the PDSCH relative to corresponding DCI, and is measured in slots. S represents a start symbol position of the PDSCH, and is counted from 0. L represents a total quantity of symbols occupied by the PDSCH, and is counted from 1.

For example, when the mapping type B is configured for a terminal device, according to Table 1, when a row index is 8, a corresponding PDSCH occupies seven symbols starting from the fifth symbol in one slot, that is, symbols 5 to 11; or when a row index is 11, a corresponding PDSCH occupies two symbols starting from the twelfth symbol in one slot, that is, symbols 12 and 13. It can be learned that the PDSCHs corresponding to the row index 8 and the row index 11 do not overlap in one slot. Therefore, there may be a plurality of PDSCHs in one slot. Therefore, with respect to the semi-static codebook, for a quantity of PDSCH candidates included in one PUCCH, jointly refer to a K1 set and a TDRA list.

For simplicity, an example in which only the mapping type A exists in Table 1 is used. In this case, one PUCCH semi-static codebook includes 5 bits, respectively corresponding to PDSCHs in D2 to D6. When DCI and a corresponding PDSCH are received in a corresponding slot, a HARQ-ACK information bit is mapped based on a data channel decoding result of the PDSCH. If no DCI is detected in the slot, a NACK is fed back at a corresponding bit position.

4. Dynamic codebook: A disadvantage of the foregoing semi-static codebook is that the codebook is fixed, and a resource waste may be caused. Therefore, the dynamic codebook is further proposed, and the dynamic codebook performs on-demand feedback based on an actual quantity of received data. However, because a terminal device may miss detecting DCI, to enable the dynamic codebook, a 2-bit downlink assignment index (downlink assignment index) usually needs to be added to the DCI, for the terminal device to detect a quantity of received DCI.

For example, refer to a feedback status shown in FIG. 3. A network device respectively schedules three PDSCHs in slots D4, D5, and D6 by using three pieces of DCI, and downlink assignment indices (downlink assignment index, DAI) corresponding to the DCI are '01', '10', and '11' respectively. A terminal device receives DCI in D4 in FIG. 3, where a corresponding DAI index is '01'. The terminal device misses detecting DCI in D5, and receives DCI in D6, where a corresponding index is '11'. In this case, the terminal device indicates that the DCI is missing in detection between D4 and D6, and therefore feeds back 3-bit HARQ-ACK information, which corresponds to the PDSCHs corresponding to D4, D5, and D6. Because the DCI is missing in detection in D5, the terminal device feeds back a NACK at a corresponding bit.

5. HARQ-ACK information feedback on a sidelink: In a sidelink scenario (that is, communication between terminal devices), for example, in a scenario of communication between the relay device and the terminal device shown in FIG. 1 or communication between the XR glasses and the mobile phone shown in FIG. 2, a sending terminal device may transmit data to a peer end through a physical sidelink shared channel (physical sidelink shared channel, PSSCH), and receive a decoding result fed back by a terminal device on a physical sidelink feedback channel (physical sidelink feedback channel, PSFCH). The PSFCH is configured by using higher layer signaling, and has a periodicity, and a periodicity value of the PSFCH may be $N_{PSSCH}^{PSFCH} = 0,1,2,4$. 0 represents that there is no PSFCH. In addition to this, one PSFCH is included in every one, two, or four slots, and the PSFCH occupies a second-to-last symbol in a slot. Because a receive power of a terminal device may change on an orthogonal frequency division multiplexing (orthogonal frequency division multiplexing, OFDM) symbol on which the PSFCH is located, a third-to-last symbol in the slot is also used to send the PSFCH, to assist the receiving terminal device in performing automatic gain control (automatic gain control, AGC) adjustment. In addition, terminal devices that send the PSSCH and the PSFCH are different. Therefore, an additional symbol (that is, a fourth-to-last symbol) needs to be added before two PFSCHs for send/receive conversion of the terminal devices.

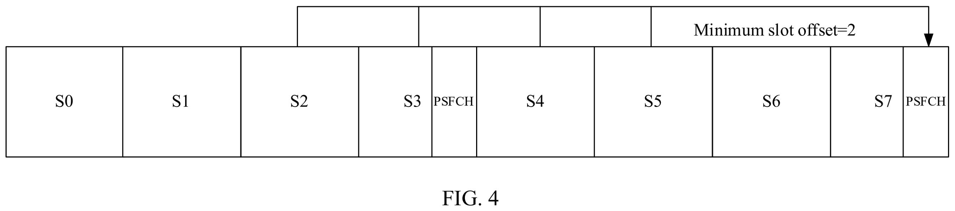

FIG. 4 shows a time relationship between a PSSCH and a PSFCH, where a PSFCH period $N_{PSSCH}^{PSFCH}$ is 4, that is, one PSFCH appears every four PSSCHs, and the PSFCH and the PSSCH share 14 symbols of one slot. In addition, considering that the terminal device needs processing time after receiving data, for example, time from decoding after receiving the PSSCH to generation of information such as a corresponding HARQ, in this case, the higher layer signaling indicates, by using a minimum slot offset (sl-minTimeGapPSFCH) parameter of a sidelink PSFCH, a minimum slot offset of a PSFCH carrying HARQ-ACK information of the PSSCH. That is, the HARQ-ACK information of the PSSCH needs to be fed back on a PSFCH in a slot that is at least sl-minTimeGapPSFCH later. As shown in FIG. 4, when sl-minTime-GapPSFCH=2, HARQ-ACK information feedback of PSSCHs in S0 and S1 may be transmitted through a first PSFCH, and HARQ-ACK information feedback of PSSCHs in S2 to S5 may be transmitted through a second PSFCH. A quantity of PSSCHs corresponding to each PSFCH is usually determined by the PSFCH period $N_{PSSCH}^{PSFCH}$. However, a case in which a PSFCH does not exist may occur. For example, if a sidelink synchronization signal block (sidelink synchronization signal block, S-SSB) is sent in a slot or sidelink control information (sidelink control information, SCI) indicates that a PSFCH is canceled, the PSFCH period is damaged. In this case, one PSFCH may correspond to more than four PSSCH HARQs. A specific quantity depends on a quantity of PSSCHs that satisfy sl-minTimeGapPSFCH.

For example, if the first PSFCH in FIG. 4 does not exist for a specific reason, HARQ-ACK information feedback corresponding to PSSCHs in S0 to S5 is all transmitted on the second PSFCH.

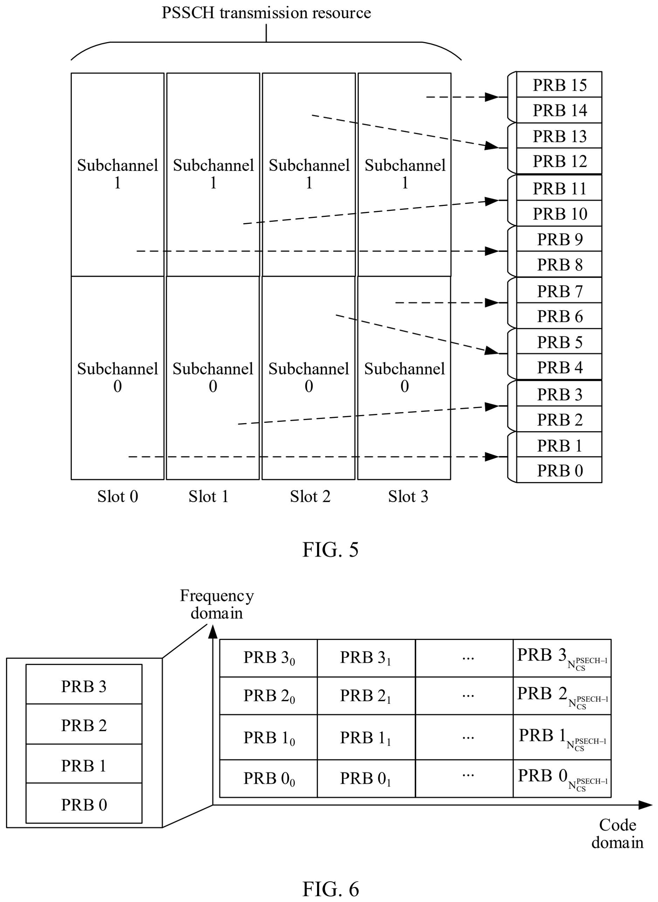

FIG. 4 shows a time domain relationship between a HARQ of a PSSCH and a PSFCH. Further, FIG. 5 shows a frequency domain relationship between HARQ-ACK information of a PSSCH and a PSFCH, that is, HARQ bits of the PSSCH are transmitted through specific frequency domain resources, for example, physical resource blocks (physical resource block, PRB) (which may also be referred to as resource blocks (resource block, RB) below), of the PSFCH. As shown in FIG. 5, one PSFCH PRB set includes 16 PRBs, and this parameter may be configured by using higher layer signaling. For example, a sidelink resource pool configuration (SL-PSFCH-Config-r16) parameter in sidelink resource pool (SL-ResourcePool) signaling in an RRC message is used to configure a quantity of PRBs of a PSFCH. Specifically, a PSFCH transmission resource set is divided into a plurality of subsets based on a PSFCH period parameter in resource pool configuration information and a quantity of subchannels that can be used for PSSCH transmission, and a PSFCH transmission resource in each subset corresponds to PSSCH transmission in one slot and one subchannel.

For example, if the PSFCH period is $N_{PSSCH}^{PSFCH}$, a resource pool includes $N_{subch}$ subchannels (configured by using higher layer signaling), and a configured quantity of PRBs of the PSFCH is $M_{PRB,set}^{PSFCH}$, a quantity of PRBs of a PSFCH corresponding to one PSSCH subchannel in one slot is $M_{subch,slot}^{PSFCH} = M_{PRB,set}^{PSFCH}/(N_{subch} \cdot N_{PSSCH}^{PSFCH})$. For a PSSCH sent on a $j^{th}$ subchannel in an $i^{th}$ slot, available PRBs of a PSFCH corresponding to the PSSCH are $[(i + j \cdot N_{PSSCH}^{PSFCH}) \cdot M_{subch,slot}^{PSFCH}, (i + 1 + j \cdot N_{PSSCH}^{PSFCH}) \cdot M_{subch,slot}^{PSFCH} - 1]$, and these PRBs form a PSFCH transmission resource subset. As shown in FIG. 5, the PSFCH period is four slots, that is, one PSFCH slot is corresponding to four PSSCH slots, the resource pool includes two subchannels, and the resource pool configuration information configures 16 PRBs for transmitting a PSFCH. Therefore, one subchannel is corresponding to PRBs of two PSFCHs, and a correspondence between a subchannel of a PSSCH and a PRB of a PSFCH is in a sequence of time domain first and then frequency domain. As shown in FIG. 5, a subchannel 0 in a slot 0 corresponds to a PRB 0 and a PRB 1 of a PSFCH, a subchannel 0 in a slot 1 corresponds to a PRB 2 and a PRB 3 of the PSFCH, and so on.

In addition, for a PRB of a PSFCH, feedback results of PSSCHs of a plurality of UEs may be multiplexed to the PRB of the PSFCH in a code division multiplexing (code division multiplexing, CDM) manner. A quantity of PSFCHs available for CDM in one PRB is determined by a parameter $N_{CS}^{PSFCH}$, and the parameter may be configured by using higher layer signaling. A transmission resource set of a PSFCH corresponding to a PSSCH is $R_{PRB,CS}^{PSFCH} = N_{type}^{PSFCH} \cdot M_{subch,slot}^{PSFCH} \cdot N_{CS}^{PSFCH}$. When a PSFCH transmission resource is determined based on an index of a start subchannel occupied by the PSSCH, $N_{type}^{PSFCH} = 1$. For example, when a PSSCH occupies a slot 0, regardless of whether the PSSCH occupies a subchannel 0 or subchannels 0 and 1, a transmission resource of a PSFCH corresponding to the PSSCH is a PRB 0 and a PRB 1. When the transmission resource of the PSFCH is determined based on indices of all subchannels occupied by the PSSCH, $N_{type}^{PSFCH} = N_{subch}^{PSSCH}$, where $N_{subch}^{PSSCH}$ is a quantity of subchannels occupied by the PSSCH. For example, if a PSSCH occupies a subchannel 0 in a slot 0, a PSFCH corresponding to the PSSCH is a PRB 0 and a PRB 1. If the PSSCH occupies a subchannel 0 and a subchannel 1 in a slot 0, a transmission resource of the corresponding PSFCH is a PRB 0, a PRB 1, a PRB 8, and a PRB 9. One PSFCH corresponds to $R_{PRB,CS}^{PSFCH}$ PSFCH transmission resources. A terminal determines, in the PSFCH transmission resource set according to the following formula, a transmission resource $(P_{ID} + M_{ID}) \bmod R_{PRB,CS}^{PSFCH}$ corresponding to a PSSCH, where $P_{ID}$ indicates ID information of UE that sends the PSSCH, that is, a source ID carried in an SCI format 2-A or 2-B, and $M_{ID}$ indicates an ID of receiving UE in the communication group, and may be determined by using a destination ID in the SCI format 2-A or 2-B. In unicast or the foregoing second feedback manner (a PSFCH transmission resource is determined based on indices of all subchannels occupied by a PSSCH), MID=0. Therefore, a receive end in the group may determine different PSFCH transmission resources according to the ID.

As shown in FIG. 6, a PSFCH corresponding to one PSSCH subchannel occupies four PRBs, and each PRB includes $N_{CS}^{PSFCH}$ cyclic shift pairs. UE may determine, based on a result of $(P_{ID} + M_{ID}) \bmod R_{PRB,CS}^{PSFCH}$ in a manner of frequency domain first and then code domain, a PRB and a cyclic shift pair for transmission. For example, if $(P_{ID} + M_{ID}) \bmod R_{PRB,CS}^{PSFCH} = 5$, the fifth PRB (calculated from 0), that is, $PRB_1$, based on frequency domain first and then code domain is used to transmit the PSFCH.

6. Sidelink scheduling: Currently, sidelink scheduling is classified into two modes: a mode 1 and a mode 2. The mode 1 is that a network device controls transmission of an SL, that is, the network device indicates, by using DCI, a sending terminal device (txUE) to send data to a receiving terminal device (rxUE) through a PSSCH. Specifically, for a 5G new radio (new radio, NR) sidelink, the network device indicates sending of the txUE by using a DCI format 3_0. For a long term evolution (long term evolution, LTE) sidelink, the network device indicates sending of the txUE by using a DCI format 3_1. Each piece of DCI may indicate sending of N (usually not greater than 3) PSSCHs at a time. Using NR as an example, indication fields of the DCI format 3_0 include the following:

(1) Resource pool index (resource pool index): A network device may configure a plurality of resource pools and corresponding indices for a terminal device. When scheduling a side transmission resource by using DCI, the network device needs to indicate resource pool index information in the DCI. The terminal device determines, based on the resource pool index information, a resource pool to which the side transmission resource scheduled by using the DCI belongs. Different parameters, such as a quantity of subchannels and a subchannel size, may be configured for different resource pools.

(2) Time gap (time gap): is used to determine a time gap between a first sidelink transmission resource and a slot in which DCI is located. A time domain position of the first sidelink transmission resource may be determined based on such information and a time domain position of the DCI received by txUE.

(3) Time resource assignment (time resource assignment): A manner in which this information field indicates a time domain is the same as that in the SCI format 1-A, and this parameter is used to determine slot gaps between a first sidelink transmission resource and N-1 sidelink transmission resources other than the first sidelink transmission resource.

(4) Frequency domain start subchannel indicator for initial transmission (low index of the subchannel allocation to the initial transmission): indicates a lowest index of a subchannel occupied by a first sidelink transmission resource. Frequency domain start positions of a PSCCH and a PSSCH are aligned. Therefore, the frequency domain start positions of the PSCCH and the PSSCH can be determined based on such information.

(5) Frequency resource assignment (frequency resource assignment): A manner in which such information indicates a frequency domain resource is the same as that in the SCI format 1-A, and this parameter is used to determine a frequency domain resource size (a quantity of subchannels) of a sidelink transmission resource, and frequency domain start positions of N-1 sidelink transmission resources other than a first sidelink transmission resource.

(6) PUCCH resource indicator (PUCCH resource indicator): A base station configures a PUCCH resource set and a corresponding index by using higher layer signaling, and a PUCCH transmission resource is determined in the resource set by using this information field in DCI.

(7) Slot gap between a PSFCH and a PUCCH (PSFCH-to-HARQ feedback timing indicator): is used to determine a time gap between a PSFCH and a PUCCH. The PSFCH is used to carry HARQ-ACK information feedback of the PSSCH indicated by DCI. If a sidelink transmission resource allocated by a base station (network device) corresponds to at least one PSFCH, the slot gap indicates a slot gap between a transmission resource of a last PSFCH and a PUCCH transmission resource.

(8) HARQ process number (HARQ process number): indicates a HARQ process number corresponding to a sidelink transmission resource allocated by a network to a terminal.

(9) New data indicator (new data indicator, NDI): indicates whether sidelink data scheduled by DCI is newly transmitted. When sidelink data scheduled in the DCI format 3_0 is newly transmitted, the NDI is toggled; otherwise, the NDI is not toggled.

(10) Configuration index (configuration index): When a sidelink-configuration scheduling-radio network temporary identifier (SL-CS-RNTI) is configured for a terminal, the DCI format 3_0 may be used to activate or release a type-2 sidelink configured grant. A network may configure a plurality of type-2 sidelink configured grants. The configuration index indicates which sidelink configured grant is activated or released by the DCI. When no SL-CS-RNTI is configured for UE, this field (information field) does not exist or has 0 bits.

(11) Counter sidelink assignment index (counter sidelink assignment index): The counter sidelink assignment index indicates a quantity of pieces of DCI that are accumulatively sent by a network and that are used to schedule a sidelink transmission resource, and a terminal determines, based on such information, a quantity of information bits during generation of a HARQ-ACK codebook.

When a terminal device receives the DCI format 3_0, a PSSCH is scheduled through a PSCCH (for example, in the SCI format 1-A) on a time-frequency domain resource indicated by the DCI. Same information fields in the DCI format 3_0 may be used for time resource assignment and frequency resource assignment in SCI.

In addition, to facilitate understanding of embodiments of this application, the following descriptions are provided.

First, in this application, "indicate" may include "directly indicate" and "indirectly indicate". When a piece of indication information is described as indicating A, the indication information may directly indicate A or indirectly indicate A, but it does not mean that the indication information necessarily includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periods and/or sending occasions of the sub-information may be the same or may be different. A specific sending method is not limited in this application. The sending periods and/or the sending occasions of the sub-information may be predefined, for example, predefined according to a protocol, or may be configured by a transmit end device by sending configuration information to a receive end device. The configuration information may include, but is not limited to, one or a combination of at least two of radio resource control signaling, MAC layer signaling, and physical layer signaling. The radio resource control signaling includes, for example, RRC signaling; the MAC layer signaling includes, for example, a MAC CE; and the physical layer signaling includes, for example, DCI.

Second, "at least one" shown in this application means one or more, and "a plurality of" means two or more. In addition, in embodiments of this application, "first", "second", and various numerical numbers (for example, "#1" and "#2") are merely used for differentiation for ease of description, and are not used to limit the scope of embodiments of this application. Sequence numbers of the following processes do not mean a sequence of execution. The sequence of execution of the processes should be determined according to functions and internal logic of the processes, and should not constitute any limitation on an implementation process of embodiments of this application. It should be understood that objects described in such a manner are interchangeable in proper cases, to describe solutions other than embodiments of this application. In addition, in embodiments of this application, words such as "710" and "720" are merely identifiers for ease of description, and do not limit a sequence of performing steps.

Third, in this application, words such as "example" or "for example" are used to represent giving examples, illustrations, or descriptions. Any embodiment or design solution described as "example" or "for example" in this application should not be construed as being more preferred or advantageous than other embodiments or design solutions. Specifically, the words such as "example" or "for example" are used to present related concepts in a specific manner.

Fourth, "storage" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories may be integrated into a decoder, a processor, or a communication apparatus. A type of the memory may be a storage medium in any form. This is not limited in this application.

Fifth, the "protocol" in embodiments of this application may be a standard protocol in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that, when a difference thereof is not emphasized, meanings to be expressed are consistent.

Seventh, in embodiments of this application, terms and English acronyms and abbreviations, such as radio resource control (RRC), are all examples provided for ease of description, and should not constitute any limitation on this application. This application does not exclude a possibility of defining another term that can implement a same or similar function in an existing or future protocol.

Eighth, the term "and/or" in this specification is merely an association relationship of associated objects, and indicates that three relationships may exist. For example, A and/or B may indicate the following three cases: Only A exists, both A and B exist, and only B exists. In addition, the character "/" in this specification usually indicates an "or" relationship between the associated objects.

With reference to FIG. 1, the foregoing briefly describes a scenario to which the communication method provided in embodiments of this application can be applied, describes basic concepts that may be used in embodiments of this application, and describes HARQ-ACK information feedback of a sidelink and HARQ-ACK information feedback of a cellular network in the basic concepts. Currently, after receiving a PDSCH, a terminal device feeds back HARQ-ACK information to a network device through a communication interface (for example, Uu) between the terminal device and the network device, causing high uplink power consumption overheads. To reduce the uplink power consumption overheads of the terminal device, this application provides a communication method, so that after receiving a PDSCH, the terminal device may feed back HARQ-ACK information to the network device through a relay device.

It should be understood that the communication method provided in embodiments of this application may be applied to a system in which communication is performed by using a multi-antenna technology, for example, the communication system 100 shown in FIG. 1. The communication system may include at least one network device, at least one terminal device, and at least one relay device.

It should be further understood that a specific structure of an execution body of a method provided in embodiments of this application is not specifically limited in embodiments shown below, provided that a program that records code for the method provided in embodiments of this application can be run to perform communication according to the method provided in embodiments of this application. For example, the method provided in embodiments of this application may be performed by a terminal device, or may be performed by a functional module that is in the terminal device that can invoke and execute a program.

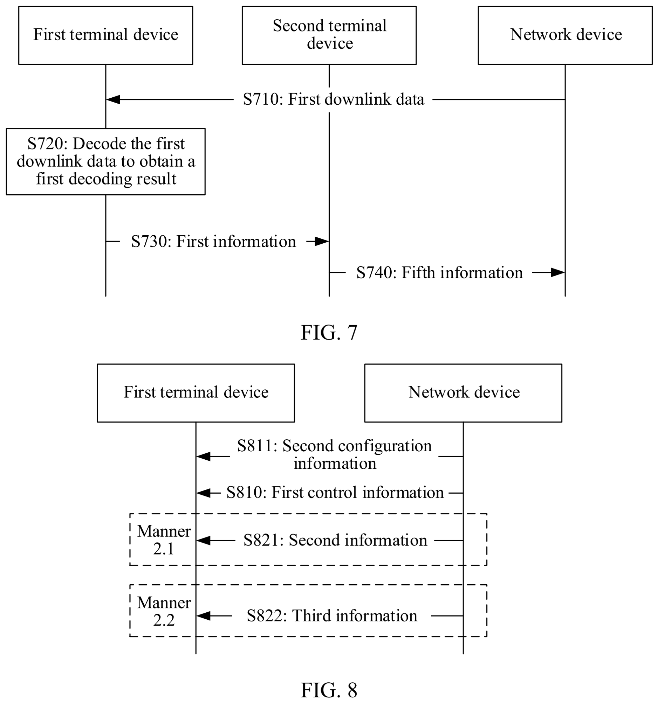

FIG. 7 is a schematic flowchart of a communication method according to this application. The method includes the following steps.

S710: A network device sends first downlink data to a first terminal device through a first link. In other words, the first terminal device receives the first downlink data from the network device through the first link.

For example, the first downlink data may be the PDSCH described above, or may be other downlink data (for example, a PDCCH) sent by the network device to the first terminal device. A specific form of the first downlink data is not limited in this embodiment. For ease of description, an example in which the first downlink data is a PDSCH #1 is used below for description.

Specifically, the first terminal device may be any terminal device that communicates with the network device. For example, in this embodiment, the first terminal device may be the terminal device shown in FIG. 1 above, or may be the XR glasses shown in FIG. 2 above.

The first link is a communication link between the first terminal device and the network device. For example, the first link is a link for communication based on a communication interface #1 (for example, Uu #2), and may also be referred to as a first communication channel. The first channel or the like is used to describe a communication channel for direct communication between the first terminal device and the network device.

In a possible implementation, that the network device sends the PDSCH #1 to the first terminal device through the first link in this embodiment may be understood as: The network device sends DCI #1 to the first terminal device through the first link, where the DCI #1 is used to schedule the PDSCH #1 for the terminal device.

Further, after receiving the PDSCH #1, the terminal device may decode the PDSCH #1 to obtain a first decoding result. The method procedure shown in FIG. 7 further includes the following step.

S720: The first terminal device decodes the first downlink data to obtain the first decoding result.

Specifically, in this embodiment, a process of how the first terminal device decodes the PDSCH #1 to obtain the first decoding result is not described in detail. For details, refer to descriptions in a current related technology in which a terminal device performs decoding after receiving a PDSCH scheduled by a network device to obtain a decoding result. Details are not described herein.

In this embodiment, the first terminal device obtains the first decoding result, and generates first HARQ-ACK information (for example, generates an acknowledgement (acknowledgement, ACK) or a negative acknowledgement (negative acknowledgement, NACK)) based on the first decoding result. After the first HARQ-ACK information is generated, in this embodiment, the first terminal device may not directly feed back the first HARQ-ACK information to the network device, but sends the first HARQ-ACK information to a second terminal device, and the second terminal device forwards the first HARQ-ACK information to the network device, so that power consumption required for feeding back the first HARQ-ACK information by the first terminal device can be reduced. The method procedure shown in FIG. 7 further includes the following step.

S730: The first terminal device sends first information to the second terminal device through a second link. In other words, the second terminal device receives the first information from the first terminal device through the second link. The first information includes the first HARQ-ACK information.

Specifically, the second terminal device may be any terminal device that establishes communication with the network device and the first terminal device. For example, in this embodiment, the second terminal device may be the relay device shown in FIG. 1 above, or may be the mobile phone shown in FIG. 2 above.

The second link is a communication link between the first terminal device and the second terminal device. For example, the second link is a link for communication based on a communication interface #2 (for example, PC5), and may also be referred to as a second communication channel. The second channel or the like is used to describe a communication channel for direct communication between the first terminal device and the second terminal device.

Further, in this embodiment, after receiving the first HARQ-ACK information of the first terminal device for the PDSCH #1, the second terminal device forwards the first HARQ-ACK information to the network device. The method procedure shown in FIG. 7 further includes the following step.

S740: The second terminal device sends fifth information to the network device through a third link. In other words, the network device receives the fifth information from the second terminal device through the third link. The fifth information includes the first HARQ-ACK information.

The third link is a communication link between the second terminal device and the network device. For example, the third link is a link for communication based on a communication interface #3 (for example, Uu #1), and may also be referred to as a third communication channel. The third channel or the like is used to describe a communication channel for direct communication between the second terminal device and the network device.

In this embodiment, how the second terminal device forwards the first HARQ-ACK information to the network device for the first terminal device is not limited, and the first HARQ-ACK information may be forwarded on a transmission resource allocated by the network device to the second terminal device. In this embodiment, how the network device configures a transmission resource for forwarding the first HARQ-ACK information is not limited, and a transmission resource that has been allocated to the second terminal device may be reused, or a transmission resource may be separately configured for the first HARQ-ACK information.

It should be understood that, in this embodiment, a prerequisite that the first terminal device may send the first HARQ-ACK information to the second terminal device through the second link is that the first terminal device has learned of a first transmission resource that can be used to transmit the first HARQ-ACK information on the second link. In this embodiment, the first terminal device may learn, in the following two manners, of the first transmission resource used to transmit the first HARQ-ACK information on the second link.

Manner 1.1: The network device indicates the first transmission resource in a dynamic indication manner. With reference to FIG. 8, the following describes in detail how the first terminal device learns of the first transmission resource in the case described in manner 1.1.

Manner 1.2: The network device indicates the first transmission resource in a semi-static manner. With reference to FIG. 10, the following describes in detail how the first terminal device learns of the first transmission resource in the case described in manner 1.2.

It should be understood that the foregoing manner 1.1 and manner 1.2 are merely examples for describing a manner in which the first terminal device determines the first transmission resource for transmitting the first HARQ-ACK information on the second link, and do not constitute any limitation on the protection scope of this application. The first transmission resource may be an unlicensed spectrum resource. In this application, it is mainly considered that the first terminal device learns of the first transmission resource based on an indication of the network device.

In the communication method shown in FIG. 7, after receiving the PDSCH, the first terminal device transmits the corresponding HARQ-ACK information to the second terminal device through the second link (for example, PC5), and then the second terminal device transmits the HARQ-ACK information to the network device. This prevents the first terminal device from directly sending the HARQ-ACK information to the network device, thereby reducing power consumption overheads caused by uplink HARQ-ACK information feedback performed by the first terminal device.

FIG. 8 is a schematic flowchart of another communication method according to this application. The method includes the following steps.

S810: The network device sends first control information to the first terminal device. In other words, the first terminal device receives the first control information from the network device.

Specifically, that the first terminal device determines the first transmission resource for transmitting the first HARQ-ACK information includes: determining specific time for transmitting the first HARQ-ACK information. For example, the first terminal device determines a first time unit in which the first terminal device sends the first information through the second link.

It should be understood that the first time unit determined by the first terminal device is a time unit for sending the first information and the first HARQ-ACK information. It may be understood that the first terminal device determines that a time unit for sending the first HARQ-ACK information is the first time unit. For example, if the first terminal device determines to send the first HARQ-ACK information in a slot, the first terminal device sends, in the slot, the first information carrying the first HARQ-ACK information.

For example, the first terminal device may determine the first time unit by determining a first time gap, where the first time gap is less than or equal to a time gap between the first time unit and a second time unit, the second time unit is a time unit in which the first terminal device receives the first downlink data or a time unit in which the first terminal device receives the first control information, and the first control information may be further used to schedule the first downlink data.

In a possible implementation, the first time gap is a time offset (time offset) between the first time unit and the second time unit. In this implementation, the first time unit is a first time unit that is the time offset later than the second time unit. It may be understood that the time gap between the first time unit and the second time unit is equal to the time offset.

In another possible implementation, the first time gap is a minimum time gap (minTimeGap) between the first time unit and the second time unit. In this implementation, the time gap between the first time unit and the second time unit is greater than or equal to the minimum time gap.

In the embodiment shown in FIG. 8, the network device may dynamically indicate a size of the first time gap by using the first control information. The first time gap is a time gap between the first time unit in which the first terminal device sends the first HARQ-ACK information and a time unit in which the first terminal device receives the PDSCH #1, or the first time gap is a time gap between the first time unit in which the first terminal device sends the first HARQ-ACK information and a time unit in which the first terminal device receives information (for example, DCI #1) for scheduling the PDSCH #1. For ease of description, the following uses an example in which the first control information is the DCI #1, and the DCI #1 indicates a time gap between the first time unit and a time unit for receiving the DCI #1 for description.

For example, the first control information is the DCI #1 in the communication method shown in FIG. 7. The DCI #1 is used to schedule the PDSCH #1, and further indicates a first time gap (time gap) (or referred to as a first time domain offset) between a time domain position of an SL resource (for example, a PSSCH or a PSFCH) carrying the first HARQ-ACK information of the PDSCH #1 and a time domain position at which the DCI #1 is received.

In a possible implementation, in this embodiment, the DCI #1 includes a field, used to indicate a time offset between a time unit for receiving the PDSCH #1 and the SL resource that carries the first HARQ-ACK information of the PDSCH #1. For example, the DCI #1 includes a PDSCH-to-HARQ-feedback-on-PSSCH timing indicator (PDSCH-to-HARQ-feedback-on-PSSCH timing indicator) field or a PDSCH-to-HARQ-feedback-on-PSFCH timing indicator (PDSCH-to-HARQ-feedback-on-PSFCH timing indicator) field. The newly added field indicates a first time gap between a time domain position of a resource for receiving the PDSCH #1 and a time domain position of the SL resource that carries the first HARQ-ACK information of the PDSCH #1.

In another possible implementation, in this embodiment, a PDSCH-to-HARQ feedback indicator (PDSCH-to-HARQ feedback indicator) field in a downlink DCI format 1_0 or format 1_1 is reused to indicate a first time gap between a time domain position of a resource for receiving the PDSCH #1 and a time domain position of the SL resource that carries the first HARQ-ACK information of the PDSCH #1.

Optionally, the foregoing field (newly added or reused) indicating the first time gap may be used together with higher layer signaling to indicate the first time gap. For example, before the network device sends the first control information to the first terminal device, the network device sends second configuration information to the first terminal device, where the second configuration information is used to configure a time gap set, and the first time gap is one time gap in the time gap set. The method procedure shown in FIG. 8 further includes the following step.

S811: The network device sends the second configuration information to the first terminal device. In other words, the first terminal device receives the second configuration information from the network device.

The second configuration information may be higher layer signaling (for example, an RRC message). For example, the higher layer signaling configures a plurality of time gap candidates for the first terminal device (for example, the network device configures four time gap candidates {3, 4, 5, 8} in total for the first terminal device, where a unit is slot).

Optionally, when the first control information reuses a PDSCH-to-HARQ feedback indicator field in a DCI format 1_0 or format 1_1, a bit width (bit width) of the PDSCH-to-HARQ feedback indicator field may be ceil($\log_2 4$)=2 bits, where

ceil($\cdot$) is ceiling (or may be replaced with $\left\lceil \log_2 4 \right\rceil$, where $\lceil \ \rceil$ indicates a ceiling operation), and 4 indicates a quantity of configured time gap candidates (for example, four time gap candidates {3, 4, 5, 8} in total are configured above).

For example, the PDSCH-to-HARQ feedback indicator field may be an index, and the index corresponds to a value in the foregoing time gap candidate. For example, an index '00' represents a first value, which is '3', that is, the first time gap is three slots, indicating that the first HARQ-ACK information of the PDSCH #1 is fed back after three slots after the PDSCH #1 is received.

It should be noted that the foregoing enumerated implementation is merely an example for describing how to indicate the first time gap by using the first control information, and does not constitute any limitation on the protection scope of this application. The first time gap may be alternatively dynamically indicated in another manner, for example, the first time gap is indicated by adding signaling, or the first time gap is indicated in a preconfigured manner (which is described below with reference to FIG. 10). An example is not described herein.

For ease of understanding, how the first control information indicates the first time gap is briefly described with reference to (a) and (b) in FIG. 9.

It can be learned from (a) in FIG. 9 that the first terminal device receives the DCI #1 and the corresponding PDSCH #1 in a slot D1. The DCI #1 indicates that the first HARQ-ACK information of the PDSCH #1 is transmitted on a PSSCH after two slots.

It can be learned from (b) in FIG. 9 that the first terminal device receives the DCI #1 and the corresponding PDSCH #1 in a slot D1. The DCI #1 indicates that the first HARQ-ACK information of the PDSCH #1 is transmitted on a PSFCH after two slots.

In addition, when the first time gap is measured in slots, a subcarrier spacing (subcarrier spacing, SCS) corresponding to a quantity of slots of the first time gap further needs to be determined. For example, an SCS corresponding to the second link is different from an SCS corresponding to the first link. As a result, duration of each slot on the second link is different from duration of each slot on the first link. For example, the SCS of the first link is 15 kHz, duration of each uplink or downlink slot is 1 ms, the SCS of the second link is 30 kHz, and duration of each slot on the second link is 0.5 ms. Therefore, when the first time gap is measured in slots, it needs to be specified whether the first time gap indicated by the first control information is a slot on the second link or a slot on the first link.

For example, the first terminal device determines, based on a first parameter, that an SCS referenced by the first time gap is the SCS corresponding to the first link or the SCS corresponding to the second link.

Optionally, the first parameter is configured by the network device. For example, the first parameter may be 1-bit information newly added to the DCI #1. For example, a 1-bit field may be added to the DCI #1 to indicate that the SCS that is indicated by the DCI #1 and that is referenced by the first time gap is the SCS corresponding to the first link or the SCS corresponding to the second link. For another example, the first parameter may be configured by using higher layer signaling. For example, an RRC message indicates the first parameter, and the first parameter is used to configure the SCS that is indicated by the DCI #1 and that is referenced by the first time gap as the SCS corresponding to the first link or the SCS corresponding to the second link.

Optionally, the first parameter is pre-programmed in the first terminal device. It may be understood that the first parameter is preconfigured in the first terminal device before delivery.

For example, the first parameter may be preconfigured, and that the SCS that is indicated by the DCI #1 and that is referenced by the first time gap is the SCS corresponding to the first link or the SCS corresponding to the second link may be preconfigured, that is, preconfigured before delivery.

Optionally, the first parameter is determined by the first terminal device and the network device through negotiation.

It should be noted that, if the first time gap is not measured in slots, but is measured in absolute time (for example, in a unit of millisecond (ms)), an additional first parameter is not required to indicate that the SCS referenced by the first time gap is the SCS corresponding to the first link or the SCS corresponding to the second link.

Further, after determining the first time unit, the first terminal device further needs to determine a first transmission resource specifically used to transmit the first HARQ-ACK information. The first transmission resource includes a first time domain resource and a first frequency domain resource, and the first time domain resource is a time domain resource in the first time unit.

With reference to manner 2.1 and manner 2.2, the following describes in detail how the first terminal device determines the first time domain resource and the first frequency domain resource when the first transmission resource is a PSSCH and a PSFCH.

Manner 2.1: The first transmission resource is a PSSCH (as shown in (a) in FIG. 9). In this implementation, that the first terminal device determines the first time domain resource and the first frequency domain resource includes:

S821: The network device sends second information to the first terminal device. In other words, the first terminal device receives the second information from the network device.

Specifically, the second information indicates the first time domain resource and the first frequency domain resource. For example, if the second information is information included in the first control information, steps S810 and S821 are one step; or the second information is different from the first control information. For ease of description, an example in which the second information is included in the first control information is used below for description.

For example, the second information is information included in the DCI #1 in the communication method shown in FIG. 7. The DCI #1 is used to schedule the PDSCH #1, and further indicates the PSSCH that carries the first HARQ-ACK information of the PDSCH #1. The first terminal device may determine, based on the indication of the DCI #1, the PSSCH for transmitting the first HARQ-ACK information.

For example, the network device configures one or more resource pools (resource pool) for the first terminal device by using higher layer signaling such as an RRC message, and each resource pool has a corresponding resource pool index (resource pool index). An indication field #1 of the DCI #1 indicates, by using an index, that a transmission resource of the first HARQ-ACK information is one of these resource pools. The resource pool in this embodiment may be a resource pool dedicated to transmitting HARQ-ACK information of a PDSCH, or may be the same as an existing PSSCH resource pool.

For example, the resource pool may be configured by using an SL resource pool (SL-ResourcePool) field in an existing RRC message. For example, the network device configures several SL resource pools and corresponding indices for the first terminal device and the second terminal device, and the DCI #1 may indicate, by indicating an index, a resource pool to which the PSSCH carrying the first HARQ-ACK information belongs.

For another example, the network device may configure, by using other higher layer signaling, a dedicated resource pool carrying HARQ-ACK information of a PDSCH and a corresponding index. For example, a plurality of resource pools (sl-PDSCH-HARQ-Pool) are configured, and each sl-PDSCH-HARQ-Pool corresponds to one index. An indication field #1 of the DCI #1 indicates an index, so as to indicate a resource pool to which the PSSCH for transmitting the first HARQ-ACK information by the first terminal device belongs.

In the case shown in manner 2.1, after the indication field #1 of the DCI #1 indicates the resource pool to which the PSSCH for transmitting the first HARQ-ACK information belongs, the DCI #1 may further indicate a first time domain resource and a first frequency domain resource that are corresponding to the PSSCH in the resource pool. For example, second information is added to the DCI #1, and the second information indicates the first time domain resource and the first frequency domain resource.

Optionally, the second information includes a first field and a second field, where the first field is a time resource assignment (time resource assignment) field, and the second field is a frequency resource assignment (frequency resource assignment) field.

Optionally, the fields indicating time resource assignment and frequency resource assignment in the DCI #1 may be further added to an SCI format 1-A of the PSSCH, for the second terminal device to determine a specific position of the PSSCH for transmitting the first HARQ-ACK information.

Further, in the case shown in manner 2.1, that the first terminal device sends the first HARQ-ACK information to the second terminal device through the second link includes:

The first terminal device sends a MAC CE to the second terminal device on the first transmission resource on the second link, where the MAC CE includes the first HARQ-ACK information. In other words, the first information in the embodiment shown in FIG. 7 may be a MAC CE.

For example, after decoding the PDSCH #1, the first terminal device may transmit the first HARQ-ACK information in a manner of a MAC CE on the PSSCH indicated by the DCI #1. The MAC CE includes a 6-bit logical channel identifier (logical channel ID, LCID), and a plurality of additional bits are used to carry the first HARQ-ACK information. The LCID exists in a MAC CE subheader, and indicates that a function of the MAC CE is to carry the first HARQ-ACK information.

For example, a decimal value of the 6-bit LCID is 0 to 63. Considering that some LCID values have been defined as other functions, and 20 to 55 are not defined currently, when the LCID is X (X is any value in 20 to 55), the LCID indicates that the MAC CE indicates the HARQ-ACK information of the first terminal device, and the HARQ-ACK information carried in the MAC CE includes 1-bit information (for example, an ACK or a NACK).

Optionally, in the case shown in manner 2.1, the first terminal device may feed back HARQ-ACK information by using a MAC CE. When the first terminal device misses detecting DCI (for example, the network device sends DCI #1 and DCI #2 to the first terminal device, and the first terminal device receives the DCI #1 but does not receive the DCI #2), the first terminal device may not transmit second HARQ-ACK information of a PDSCH #2 corresponding to the DCI #2 that is missing in detection. For example, the first terminal device does not send a MAC CE corresponding to the second HARQ-ACK information to the second terminal device. In this case, confusion may occur when the second terminal device receives and feeds back the HARQ-ACK information.

For example, the network device sends two PDSCHs, but the first terminal device detects only one piece of DCI, and may feed back only one piece of HARQ-ACK information (one MAC CE). During reception, the second terminal device may generate an incorrect HARQ codebook. To prevent the second terminal device from generating an incorrect HARQ codebook, in the case shown in manner 2.1, the first terminal device may indicate, in the following possible implementations, whether DCI is missing in detection.

In a possible implementation, the MAC CE sent by the first terminal device to the second terminal device further carries a HARQ process number, to notify the second terminal device of a HARQ process whose feedback result is the MAC CE.

In another possible implementation, the first terminal device may determine a quantity of PDSCHs corresponding to HARQ-ACK information transmitted on a PSSCH, and generate a corresponding quantity of MAC CEs. When receiving a PDSCH in a corresponding slot position, the first terminal device feeds back HARQ-ACK information on a corresponding MAC CE. If no PDSCH is received, a non-reception indication is fed back.

For example, if a quantity of PDSCHs corresponding to HARQ-ACK information transmitted on a PSSCH indicates four PDSCHs: a PDSCH #0, a PDSCH #1, a PDSCH #2, and a PDSCH #3, the first terminal device sends four MAC CEs: a MAC CE #0, a MAC CE #1, a MAC CE #2, and a MAC CE #3, on the PSSCH. When the first terminal device receives PDSCHs in only slot positions corresponding to the PDSCH #2 and the PDSCH #3, the PDSCH #2 is successfully decoded, and the PDSCH #3 fails to be decoded, NACKs are fed back in the MAC CE #0 and the MAC CE #1 (because no PDSCH is received), an ACK is fed back in the MAC CE #2, and a NACK is fed back in the MAC CE #3 (decoding fails).

Alternatively, discontinuous transmission (Discontinuous transmission, DTX) is fed back in the MAC CE #0 and the MAC CE #1, to indicate that no PDSCH is received, an ACK is fed back in the MAC CE #2, and a NACK is fed back in the MAC CE #3. In this case, 1-bit feedback is insufficient, and should be extended to 2 bits, for example, 00-DTX, 01-ACK, 10-NACK, and 11-reserved (reserved).

Manner 2.2: The first transmission resource is a PSFCH (as shown in (b) in FIG. 9). In this implementation, that the first terminal device determines the first time domain resource and the first frequency domain resource includes:

S822: The network device sends third information to the first terminal device. In other words, the first terminal device receives the third information from the network device.

Specifically, the third information indicates the first frequency domain resource. For example, if the third information is information included in the first control information, steps S810 and S822 are one step; or the third information is different from the first control information. For ease of description, an example in which the third information is included in the first control information is used below for description.

For example, the network device adds an indication field (namely, the third information) to the DCI #1, to indicate the PSFCH for transmitting the first HARQ-ACK information. The first terminal device may determine, based on the indication of the DCI #1, the PSFCH for transmitting the first HARQ-ACK information.

For example, the network device configures one or more resource pools (resource pool) for the first terminal device by using higher layer signaling (such as an RRC message), and each resource pool has a corresponding resource pool index (resource pool index). An indication field of the DCI #1 indicates, by using an index, that a transmission resource of the first HARQ-ACK information is one of these resource pools. The resource pool in this embodiment may be a resource pool dedicated to transmitting HARQ-ACK information of a PDSCH, or may be the same as an existing PSFCH resource pool.

For example, the resource pool may be configured by using an SL resource pool (SL-ResourcePool) field in an existing RRC message. For example, the network device configures several SL resource pools and corresponding indices for the first terminal device and the second terminal device, and each SL-ResourcePool configures a PSFCH for the first terminal device and the second terminal device by using sl-PSFCH-Config-r16. An indication field #2 of the DCI #1 indicates an index, to indicate a resource pool to which the PSFCH for transmitting the first HARQ-ACK information by the first terminal device belongs.

For another example, the network device may configure, by using other higher layer signaling, a dedicated resource pool carrying HARQ-ACK information of a PDSCH and a corresponding index. For example, a plurality of resource pools (sl-PDSCH-HARQ-Pool) are configured, and each sl-PDSCH-HARQ-Pool corresponds to one index. An indication field #2 of the DCI #1 indicates an index, so as to indicate a resource pool to which the PSFCH for transmitting the first HARQ-ACK information by the first terminal device belongs.

In the case shown in manner 2.2, when HARQ-ACK information of a plurality of PDSCHs is transmitted in a same slot, for example, the DCI #0 schedules a PDSCH #0 in a slot D1, and indicates to perform HARQ-ACK information feedback on a PSFCH in a fourth slot, and the DCI #1 schedules a PDSCH #1 in a slot D2, and also indicates to perform HARQ-ACK information feedback on the PSFCH in the fourth slot. In this case, the PSFCHs indicated by the DCI #0 and the DCI #1 may be a same PSFCH, or may be different PSFCHs. For example, the DCI #0 indicates a resource pool index 0 (or a dedicated resource pool 0), and the DCI #1 indicates a resource pool index 1 (or a dedicated resource pool 1). In this case, different PSFCHs are indicated by using the DCI, so that HARQ-ACK information of a plurality of PDSCHs can be transmitted in one slot.

Optionally, HARQ-ACK information of a plurality of PDSCHs may alternatively be transmitted on a same PSFCH. For example, the DCI #0 and the DCI #1 respectively schedule a PDSCH #0 and a PDSCH #1, but the DCI #0 and the DCI #1 indicate a same PSFCH. In this case, PRBs of the PSFCH may be divided into subsets of a corresponding quantity based on a quantity (for example, 2) of HARQ-ACK information that needs to be carried.

For example, if 20 PRBs are configured for one PSFCH by using higher layer signaling, when two PDSCHs are received, the 20 PRBs are divided into two PSFCH sets, for example, are evenly divided into two PSFCH subsets, each PSFCH subset includes 10 PRBs, and each PSFCH is used to transmit HARQ-ACK information of each of the PDSCH #0 and the PDSCH #1.

Further, if HARQ-ACK information of the PDSCH #0, the PDSCH #1, a PDSCH #2, and a PDSCH #3 is fed back in a same slot, but the DCI indicates that the PDSCH #0 and the PDSCH #1 are transmitted by a same PSFCH #0, and the PDSCH #2 and the PDSCH #3 are transmitted by a PSFCH #1, PRBs of the PSFCH #0 may be grouped to carry HARQ-ACK information of the PDSCH #0 and the PDSCH #1, and PRBs of the PSFCH #1 may be grouped to carry HARQ-ACK information of the PDSCH #2 and the PDSCH #3.

Optionally, in the case shown in manner 2.2, if the first terminal device misses detecting DCI, the first terminal device cannot receive a PDSCH scheduled by using the DCI. This may cause a problem in resource block allocation of the PSFCH. For example, the network device sends two pieces of DCI (DCI #1 and DCI #2), and the two pieces of DCI indicate a same PSFCH. However, the first terminal device successfully decodes only one piece of DCI. In this case, the PSFCH is not segmented. Consequently, a problem of non-alignment between a receive end and a transmit end occurs, affecting the second terminal device in decoding the PSFCH. In the case shown in manner 2.2, the first terminal device may indicate, in the following possible implementations, whether DCI is missing in detection.

In a possible implementation, indication information #1 is added to the DCI, to indicate a quantity of PDSCHs, or indicate that the PDSCH is a specific PDSCH.

For example, the indication information #1 may be a relay-downlink assignment index (relay-downlink assignment index, R-DAI), used to indicate an accumulative index of the PDSCH indicated by the DCI. When the indication field is x bits, a value of the accumulative index that may be indicated by the indication field is $[0, 2^x - 1]$. It should be understood that this does not represent an actual quantity of scheduling DCI. For example, when x=2 bits, a value range of the index is 0 to 3. When the network device sends six pieces of DCI, R-DAIs of the DCI are 00, 01, 10, 11, 00, and 01 respectively, and corresponding decimal R-DAIs are 0, 1, 2, 3, 4, and 5.

Table 2 shows a mapping relationship between a value of an R-DAI and a quantity (Y) of PDCCH transmission opportunities for scheduling a PDSCH.

Table 2

| R-DAI binary | R-DAI decimal | Y |
|---|---|---|
| 00 | 1 | (Y-1) mod 4 + 1 = 1 |
| 01 | 2 | (Y-1) mod 4 + 1 = 2 |

(continued)

| R-DAI binary | R-DAI decimal | Y |
|---|---|---|
| 10 | 3 | (Y-1) mod 4 + 1 = 3 |
| 11 | 4 | (Y-1) mod 4 + 1 = 4 |

Table 2 may be understood as follows: When the value of the R-DAI is 1, corresponding PDCCH monitoring opportunities are 1, 5, and 9; or when the value of the R-DAI is 2, corresponding PDCCH monitoring opportunities are 2, 6, and 10, and so on.

Therefore, the second terminal device may determine, based on the R-DAI parameter, a quantity of PDSCHs whose HARQ-ACK information is transmitted on one PUCCH, that is, a size of a HARQ codebook, and whether DCI missing detection occurs. For example, when the second terminal device detects that two pieces of DCI respectively indicate that values of the R-DAI are '01' and '11', the second terminal device may determine that missing detection occurs in the DCI indicating that the R-DAI is '10', so as to determine that the size of the HARQ-ACK information codebook is 3 bits.

In the communication method shown in FIG. 8, the network device indicates, in a dynamic indication manner, the SL resource (for example, the PSSCH or the PSFCH shown above) used to transmit the HARQ-ACK information. This application further provides another method for determining the SL resource used to transmit the HARQ-ACK information. The following provides detailed descriptions with reference to FIG. 10.

FIG. 10 is a schematic flowchart of another communication method according to this application. The method includes the following steps.

S1010: The network device sends first configuration information to the first terminal device. In other words, the first terminal device receives the first configuration information from the network device. Before sending the PDSCH #1 to the first terminal device, the network device sends the first configuration information to the first terminal device, where the first configuration information indicates the first time gap.

Specifically, that the first terminal device determines the first transmission resource for transmitting the first HARQ-ACK information includes: determining specific time for transmitting the first HARQ-ACK information. For example, the first terminal device determines a first time unit in which the first terminal device sends the first information through the second link.

It should be understood that the first time unit determined by the first terminal device is a time unit for sending the first information and the first HARQ-ACK information. It may be understood that the first terminal device determines that a time unit for sending the first HARQ-ACK information is the first time unit. For example, if the first terminal device determines to send the first HARQ-ACK information in a slot, the first terminal device sends, in the slot, the first information carrying the first HARQ-ACK information.

For example, the first terminal device may determine the first time unit by determining a first time gap, where the first time gap is less than or equal to a time gap between the first time unit and a second time unit, the second time unit is a time unit in which the first terminal device receives the first downlink data or a time unit in which the first terminal device receives the first control information, and the first control information may be further used to schedule the first downlink data.

In a possible implementation, the first time gap is a time offset (time offset) between the first time unit and the second time unit. In this implementation, the first time unit is a first time unit that is the time offset later than the second time unit. It may be understood that the time gap between the first time unit and the second time unit is equal to the time offset.

In another possible implementation, the first time gap is a minimum time gap (minTimeGap) between the first time unit and the second time unit. In this implementation, the time gap between the first time unit and the second time unit is greater than or equal to the minimum time gap.

In the embodiment shown in FIG. 10, the network device may statically configure the first time gap by using the first configuration information. The first time gap is a time gap between the first time unit in which the first terminal device sends the first HARQ-ACK information and a time unit in which the first terminal device receives the PDSCH #1, or the first time gap is a time gap between the first time unit in which the first terminal device sends the first HARQ-ACK information and a time unit in which the first terminal device receives information (for example, DCI #1) for scheduling the PDSCH #1. For ease of description, an example in which the first configuration information is used to configure a time gap between the first time unit and a time unit for receiving the DCI #1 is used below for description.

For example, if the first transmission resource is a PSSCH, the first configuration information may be used to configure a first time gap between the DCI #1 and the PSSCH used to transmit the first HARQ-ACK information. For example, the network device configures the first time gap by sending higher layer signaling (for example, an RRC message). The first time gap may be measured in slots, or may be in a unit of millisecond.

For example, the time gap between the DCI #1 and the first time unit is referred to as timeGap, to indicate the first terminal device to send, when the first terminal device receives a PSSCH in a timeGap$^{th}$ slot after the DCI #1, first HARQ-ACK information corresponding to the PDSCH #1 scheduled by the DCI #1. For example, the first HARQ-ACK information of the PDSCH #1 scheduled by the DCI #1 that is received in D0 is transmitted on a PSSCH in a second slot (namely, a third S slot) after D0.

When timeGap is measured in slots, a subcarrier spacing (subcarrier spacing, SCS) corresponding to a quantity of slots of the first time gap further needs to be determined. For example, an SCS corresponding to the second link may be different from an SCS corresponding to the first link. As a result, duration of each slot on the second link is different from duration of each slot on the first link. For example, the SCS of the first link is 15 kHz, duration of each uplink or downlink slot is 1 ms, the SCS of the second link is 30 kHz, and duration of each slot on the second link is 0.5 ms. Therefore, when an offset of the first time gap is a slot, it needs to be specified whether the time gap indicated by the DCI #1 references a slot on the second link or a slot on the first link.

Optionally, the first configuration information indicating the first time gap may be used together with higher layer signaling to indicate the first time gap. For example, before the network device sends the first configuration information to the first terminal device, the network device sends second configuration information to the first terminal device, where the second configuration information is used to configure a time gap set, and the first time gap is one time gap in the time gap set.

For ease of understanding, with reference to (a) to (c) in FIG. 11, how the first configuration information configures the first time gap between the DCI #1 and the PSSCH used to transmit the first HARQ-ACK information is briefly described.

It can be learned from (a) in FIG. 11 that the time gap timeGap between the DCI #1 and the PSSCH is equal to 2, indicating that when the first terminal device receives a PSSCH in a second slot after the DCI #1, the first terminal device sends first HARQ-ACK information corresponding to the PDSCH #1 scheduled by using the DCI #1.

It can be learned from (b) in FIG. 11 that, the SCS of the first link is 15 kHz, duration of each slot is 1 ms, the SCS of the second link is 30 kHz, and duration of each slot is 0.5 ms. If timeGap=2 slots, and the SCS of the second link is used as a reference for timeGap, after a PDSCH is received in D1, transmission is performed on a PSSCH that is two slots apart from D1 on the second link (that is, a sixth S slot).

It can be learned from (c) in FIG. 11 that, if the SCS of the first link is used as a reference for timeGap, that is, timeGap=2 slots on the first link, after receiving a PDSCH in a slot D0 on the first link, the first terminal device transmits HARQ-ACK information of the PDSCH on a PSSCH in a slot on the second link that is two slots apart from D0 on the first link. As shown in (c) in FIG. 11, a slot that is separated from D0 by two slots on the first link, that is, a slot D2, is corresponding to two slots on the second link. For example, in this scenario, a first slot that is on the second link and that is corresponding to D2 is used to transmit HARQ-ACK information of a PDSCH.

It should be noted that the slot on the first link may not be aligned with the slot on the second link as shown in the figure. For example, a first S slot in FIG. 11 may be slightly later than the slot D0. In this case, a terminal device (for example, the first terminal device or the second terminal device) may report a timing alignment (timing alignment) amount to the network device, to determine a difference between the slot on the second link and the slot on the first link, so that the network device and the terminal device are synchronized in the slots on the first link and the second link.

In addition, timeGap may reuse existing sl-minTimeGapPSFCH (a minimum gap between a PSFCH and an associated PSSCH, which is usually two or three slots). When this parameter is reused, the parameter no longer indicates the slot gap between the PSFCH and the PSSCH, but may be used to indicate a minimum slot gap between a PSSCH and a PDSCH (or DCI or a PDCCH), that is, a PSSCH that carries HARQ-ACK information of a PDSCH can be determined by using the PDSCH (or DCI) and the sl-minTimeGapPSFCH parameter.

For example, if the first transmission resource is a PSFCH, the first configuration information may be used to configure a first time gap between the DCI #1 and the PSFCH used to transmit the first HARQ-ACK information. For example, the network device configures the first time gap by sending higher layer signaling (for example, an RRC message). The first time gap may be measured in slots, or may be in a unit of millisecond.

After receiving the PDSCH #1, the first terminal device may also transmit the first HARQ-ACK information of the PDSCH #1 by using the PSFCH. This is the same as the foregoing PSSCH. When the first HARQ-ACK information of the PDSCH #1 is transmitted by using the PSFCH, a resource and a slot position of the PSFCH also need to be indicated.

First, the network device semi-statically configures, by using higher layer signaling (for example, an RRC message), a time gap between the PSFCH carrying the first HARQ-ACK information of the PDSCH #1 and the PDSCH #1. For example, a new parameter timeGap is introduced into the higher layer signaling (the RRC message), to determine a time gap between the PSFCH and the PDSCH #1 (or the DCI #1). A unit may be slot or the like.

Alternatively, the network device may reuse sl-minTimeGapPSFCH in a PSFCH configuration in existing higher layer signaling. In this case, sl-minTimeGapPSFCH indicates a minimum gap between the PSFCH and the PDSCH #1 (or the DCI #1).

For ease of understanding, with reference to FIG. 12, how the first configuration information configures the first time gap between the DCI #1 and the PSFCH used to transmit the first HARQ-ACK information is briefly described. It can be learned from FIG. 12 that timeGap=2 slots.

It should be understood that, in this implementation, similar to the foregoing description in which the first transmission resource is a PSSCH, a unit of timeGap may alternatively be another time unit, for example, millisecond. When the first time gap is measured in slots, a subcarrier spacing (subcarrier spacing, SCS) corresponding to a quantity of slots of the first time gap further needs to be determined. timeGap may use the SCS of the first link as a reference, or may use the SCS of the second link as a reference. In FIG. 12, SCSs of the first link and the second link are the same, for example, both are 30 kHz, timeGap=2 slots, and a PSFCH period is also two slots. Therefore, HARQ-ACK information of PDSCHs transmitted in D0 and D1 may be transmitted on a first PSFCH that is at least two slots apart, that is, a PSFCH in a fourth slot. For D2 and D3, transmission is performed on a first PSFCH that is at least two slots apart, that is, a PSFCH in a sixth slot.

Further, after determining the first time gap, the first terminal device further needs to determine a first transmission resource specifically used to transmit the first HARQ-ACK information. The first transmission resource includes a first time domain resource and a first frequency domain resource, and the first time domain resource is a time domain resource in the first time unit.

With reference to manner 3.1 and manner 3.2, the following describes in detail how the first terminal device determines the first time domain resource and the first frequency domain resource in this embodiment when the first transmission resource is a PSSCH and a PSFCH.

Manner 3.1: The first transmission resource is a PSSCH (as shown in (a) to (c) in FIG. 11). In this implementation, that the first terminal device determines the first time domain resource and the first frequency domain resource includes:

S1021: The network device sends third configuration information to the first terminal device. In other words, the first terminal device receives the third configuration information from the network device. Before sending the PDSCH #1 to the first terminal device, the network device sends the third configuration information to the first terminal device, where the third configuration information indicates the first time domain resource and the first frequency domain resource.

Specifically, the third configuration information is used to configure a PSSCH. For example, a frequency domain resource configured by using the third configuration information may include: a quantity of subchannels (sl-NumSubchannel), indicating a quantity of subchannels; a subchannel size (sl-SubchannelSize), indicating a quantity of consecutive PRBs included in one subchannel; a subchannel start RB index (sl-StartRB-Subchannel), indicating a start PRB index of a first subchannel in a resource pool; and a frequency domain resource of a PSCCH corresponding to the PSSCH, for example, a PSCCH frequency domain resource indicator (sl-FreqResourcePSCCH), indicating a size of a frequency domain resource of the PSCCH. For example, a value range is {10, 12, 15, 20, 25} PRBs.

For example, the frequency domain resource configured by using the third configuration information includes at least a start symbol (sl-StartSymbol) of the PSSCH in a PC5 slot and a quantity of symbols (sl-LengthSymbols). Optionally, the third configuration information may further configure a time domain resource (sl-TimeResourcePSCCH) of the PSCCH, to indicate a quantity of symbols occupied by the PSCCH.

Optionally, the third configuration information is an RRC message.

Further, in the case shown in manner 3.1, that the first terminal device sends the first HARQ-ACK information to the second terminal device through the second link includes:

The first terminal device sends a MAC CE to the second terminal device on the first transmission resource on the second link, where the MAC CE includes the first HARQ-ACK information. For a specific implementation, refer to the embodiment shown in FIG. 8 in which the first terminal device sends the MAC CE to the second terminal device. Details are not described herein again.

Manner 3.2: The first transmission resource is a PSFCH (as shown in FIG. 12). In this implementation, that the first terminal device determines the first time domain resource and the first frequency domain resource includes:

S1022: The first terminal device determines the first frequency domain resource based on a first quantity. The first quantity is a quantity M of downlink data included in a first downlink data set to which the first downlink data belongs, M pieces of HARQ-ACK information corresponding to the M pieces of downlink data are all transmitted on the PSFCH, and M is a positive integer.

It should be understood that in this application, an example in which one piece of downlink data corresponds to one piece of HARQ-ACK information is mainly used for description. In some cases, one piece of downlink data may correspond to a plurality of pieces of HARQ-ACK information. In other words, the M pieces of downlink data may correspond to L pieces of HARQ-ACK information, and L is a positive integer greater than or equal to M. If one piece of downlink data corresponds to a plurality of pieces of HARQ-ACK information, the first quantity in this embodiment should be replaced with L.

As shown in FIG. 12, each PSFCH may transmit HARQ-ACK information of more than one PDSCH. Therefore, a problem of how to allocate PRBs in one PSFCH to transmit HARQ-ACK information of a plurality of PDSCHs needs to be further resolved.

It should be understood that, a prerequisite for determining how to allocate PRBs in one PSFCH to transmit HARQ-ACK information of a plurality of PDSCHs is to determine a quantity of HARQ-ACK information of PDSCHs that can be transmitted through one PSFCH. Specifically, in this embodiment, the following manners (the following manner 3.2.1, manner 3.2.2, and manner 3.2.3) are provided to determine the quantity of HARQ-ACK information of PDSCHs transmitted through one PSFCH:

Manner 3.2.1: A quantity of HARQ-ACK information (or referred to as a PDSCH transmission opportunity set or a quantity of PDSCH transmission opportunities) of PDSCHs that may be transmitted on each PSFCH is determined based on a PSFCH period and the SCSs of the first link and the second link.

In the case shown in manner 3.2.1, a quantity of HARQ-ACK information of PDSCHs that can be carried in each PSFCH depends on the PSFCH period and the SCSs of the first link and the second link. Specifically, the following steps are included.

Step 1: Determine, based on a first time gap (timeGap or sl-minTimeGapPSFCH), a slot position of a PDSCH corresponding to one PSFCH. Using FIG. 12 as an example, timeGap=2 slots, and a PDSCH corresponding to one PSFCH is at least two slots apart from the PSFCH. For example, an earliest slot of a PDSCH corresponding to a second PSFCH is D1 (in other words, the PSFCH carries HARQ-ACK information of PDSCHs transmitted in and before the slot D1), and a third PSFCH carries HARQ-ACK information of PDSCHs transmitted in and before a slot D3.

Step 2: According to the period $N_{PSSCH}^{PSFCH}$ of the PSFCH, a first quantity M of HARQ-ACK information of PDSCHs transmitted on the PSFCH may be determined, which may also be referred to as a PDSCH transmission opportunity set $M_A^{PDSCH}$ (denoted as M in the following). Using FIG. 12 as an example, according to step 1, it may be determined that a slot corresponding to a second PSFCH is calculated forward from D1, and then according to a PSFCH period being 2, it may be determined that HARQ-ACK information of a PDSCH in a first-link slot corresponding to two second-link slots is transmitted on the PSFCH, that is, a PDSCH transmission opportunity set corresponding to one PSFCH in FIG. 12 is

$$M = N_{PSSCH}^{PSFCH} .$$

Further, because the SCSs of the first link and the second link may be different, a PDSCH corresponding to a PSFCH may not be equivalent to a PSFCH period.

For example, as shown in (a) in FIG. 13, the SCS of the first link is half of that of the second link. For example, the SCS of the first link is a 30k SCS, and the SCS of the second link is 60 kHz. When timeGap is two second-link slots, and the PSFCH period is 2, one PSFCH corresponds to a transmission opportunity in only one downlink slot. Alternatively, when timeGap is two PC5 slots and the PSFCH period is 4, one PSFCH corresponds to transmission opportunities in two downlink slots.

For example, as shown in (b) in FIG. 13, the SCS of the first link is twice the SCS of the second link. For example, the SCS of the first link is 60 kHz, and the SCS of the second link is 30 kHz. That timeGap is two second-link slots is still used as an example. In this case, one PSFCH corresponds to PDSCH transmission opportunities in four downlink slots.

It should be understood that a quantity of downlink slots corresponding to one PSFCH does not represent a PDSCH transmission opportunity set. Referring to related descriptions in Table 1, there may be more than one PDSCH in one slot. Therefore, a quantity of downlink slots corresponding to one PSFCH may not be completely equivalent to a size of a PDSCH transmission candidate set *M*. Using (b) in FIG. 13 as an example, when a plurality of, for example, X=2, PDSCHs may be transmitted in one downlink slot, a size of a PDSCH transmission candidate of one PSFCH may be equivalent to $P_{PSSCH}^{PSFCH} \cdot X = 8$. In addition, because configurations such as an uplink slot and a flexible slot exist in Uu, in (b) in FIG. 13, it can be seen that a third PSFCH corresponds to only three downlink slots. In this case, the PSFCH may construct, for only the three downlink slots, a HARQ codebook for transmitting a PDSCH. It should be understood that, each PSFCH may correspond to a different quantity of PDSCH transmission candidates.

In some cases, for example, when each DCI schedules only one PDSCH, a PDSCH transmission opportunity set corresponding to each PSFCH may be obtained by using a formula $P_{PSSCH}^{PSFCH}/(2^{u^{PC5}-u^{Uu}})*X$, where X represents a quantity of PDSCHs that can be transmitted in each slot. For example, when only a type A PDSCH mapping manner is supported, X=1. In addition, $u^{PC5}$ and $u^{Uu}$ respectively represent subcarrier configurations of PC5 and Uu2, as shown in Table 3.

Table 3

| μ | Δf = $2^{\mu} \cdot 15[kHz]$ | Cyclic prefix |
|---|---|---|
| 0 | 15 | Normal |
| 1 | 30 | Normal |
| 2 | 60 | Normal, extended |
| 3 | 120 | Normal |
| 4 | 240 | Normal |

(continued)

| μ | Δf = $2^\mu \cdot 15[kHz]$ | Cyclic prefix |
|---|---|---|
| 5 | 480 | Normal |
| 6 | 960 | Normal |

Manner 3.2.2: HARQ-ACK information of a PDSCH that may be transmitted on each PSFCH is determined based on a configuration of higher layer signaling.

In the case shown in manner 3.2.2, a quantity of HARQ-ACK information of PDSCHs that can be carried in each PSFCH depends on the configuration of the higher layer signaling. Specifically, it is described in the foregoing basic concepts that, for a PUCCH, a quantity of PDSCHs that can be transmitted by the PUCCH depends on higher layer signaling, for example, dl-DataToUL-ACK-r16. This parameter usually includes several slot offsets, and is used to determine a time gap between the PUCCH and the PDSCH.

Specifically, in this embodiment, the network device configures, for the first terminal device by using higher layer signaling, a time gap set including the first time gap. The time gap set includes at least one element, and each element is a positive integer, and corresponds to one time gap. A unit may be slot. Therefore, a quantity of HARQ-ACK information of PDSCHs that may be transmitted on the PSFCH may be determined based on a slot position of the PSFCH and the foregoing time gap set.

For example, the PDSCH-to-PSFCH time gap list includes three elements: {2, 3, 5}. For a PSFCH, PDSCHs corresponding to the second, third, and fifth slots before a slot in which the PSFCH is located form a PDSCH transmission opportunity set, as shown in FIG. 14.

In FIG. 14, based on the PDSCH-to-PSFCH time gap set, HARQ-ACK information of PDSCHs that may be transmitted on a third PSFCH is PDSCHs received in D0, D2, and D3, and HARQ-ACK information of PDSCHs that may be transmitted on a fourth PSFCH is PDSCHs received in D2, U, and D4. Because U is an uplink slot and cannot transmit a PDSCH, U may not be included in the HARQ-ACK information of the PDSCHs that may be transmitted on the fourth PSFCH.

Manner 3.2.3: The network device sends fourth information to the first terminal device, where the fourth information indicates a first quantity M of downlink data in the first downlink data set, which may also be referred to as a PDSCH transmission opportunity set $M_A^{PDSCH}$. The first terminal device determines, based on the fourth information, a quantity of HARQ-ACK information of PDSCHs that may be transmitted on each PSFCH. For example, the network device explicitly indicates a DAI by using DCI. For a transmission opportunity index, refer to DAI information in the DCI, and the DAI may be directly reused as the PDSCH transmission opportunity index.

After a quantity of PDSCH transmission opportunities is determined, HARQ-ACK information of the PDSCH may be fed back in a manner of a dynamic or semi-static codebook.

In a possible implementation, HARQ-ACK information of a PDSCH may be transmitted on the second link in a manner of a dynamic codebook, or when the DCI explicitly indicates an accumulative index of each piece of DCI (or a PDSCH), a PRB allocation manner of the PSFCH may be determined based on indication information of the DCI. FIG. 14 is used as an example. A transmission set of a PDSCH corresponding to one PSFCH includes three candidates. However, if the first terminal device determines, based on DCI indication information, that two pieces of DCI (or PDSCHs) are received, PRBs of the PSFCH may be divided based on an actual situation, that is, two PDSCHs.

In another possible implementation, HARQ-ACK information of a PDSCH may be transmitted on the second link in a manner of a semi-static codebook. For example, when the DCI does not explicitly indicate an accumulative index of each piece of DCI, PRBs of the PSFCH need to be divided based on a quantity of PDSCH candidates. For example, in FIG. 14, a third PSFCH includes three PDSCH transmission opportunities, and therefore, the PSFCH is used for HARQs of three PDSCHs, and a fourth PSFCH includes two PDSCH transmission opportunities, and therefore, the PSFCH is used for HARQ-ACK information transmission of two PDSCHs.

It should be noted that, for the two PSFCHs, the PDSCH in the slot D2 is used as a transmission opportunity. In this case, the two PSFCHs need to reserve a feedback PRB for the transmission opportunity in the slot. After decoding the PDSCH in the slot D2, the first terminal device may simultaneously perform feedback on the two PSFCHs. Alternatively, the DCI explicitly indicates a time gap from the PDSCH to the PSFCH. For example, if the DCI for scheduling the PDSCH in D2 indicates that the time gap is 3, HARQ-ACK information of the PDSCH in D2 is transmitted on the third PSFCH, and a NACK is fed back on a PSFCH PRB reserved for the slot on the fourth PSFCH.

It should be further noted that the SCSs of the first link and the second link in FIG. 14 are the same. However, there may be a case that the SCSs of the first link and the second link are different. When the SCSs are different, if the time gap is in a time unit of ms or the like, no impact is caused. However, if the time gap is still measured in slots, it needs to be specified whether the slot on the first link or the slot on the second link is used when the first time gap is measured in slots.

When the first time gap uses the first link as a reference, using (a) in FIG. 15 as an example, in a case in which the SCS of the second link is greater than the SCS of the first link, if a slot on the first link corresponding to the last PSFCH is $n_{sl}$, for example, D4, PDSCH transmit opportunity slots corresponding to the slot are $n_{sl}$-2, $n_{sl}$-3, and $n_{sl}$-5, respectively corresponding to D0, D2, and D3. $n_{sl}$-2 may be understood as a forward offset by two slots by using $n_{sl}$ as a start point. Similarly, $n_{sl}$-3 may be understood as a forward offset by three slots by using $n_{sl}$ as a start point, and $n_{sl}$-5 may be understood as a forward offset by five slots by using $n_{sl}$ as a start point. Using (b) in FIG. 15 as an example, the SCS of the second link is less than the SCS of the first link, a slot on the first link corresponding to the last PSFCH is $n_{sl}$, for example, D8, and PDSCH transmission opportunity slots corresponding to the slot are $n_{sl}$-2, $n_{sl}$-3, and $n_{sl}$-5, respectively corresponding to D5, D7, and U, where U is an uplink slot and may not be included in a PDSCH transmission opportunity.

When the second link is used as a reference for the first time gap, that the time gap list is {2, 3, 5} is still used as an example, as shown in (a) (the SCS of the second link is greater than the SCS of the first link) in FIG. 16 and (b) (the SCS of the second link is less than the SCS of the first link) in FIG. 16. In (a) in FIG. 16, using the last PSFCH as an example, PDSCH slots corresponding to the last PSFCH are U (when a gap is 2 or 3) and D3 (when a gap is 5). In (b) in FIG. 16, PDSCH slots corresponding to the last PSFCH are D5 and D6 (when a gap is 2), D4 and U (when a gap is 3), and D0 and D1 (when a gap is 5). Therefore, when PC5 is used as a reference, a quantity of slots corresponding to a PDSCH time gap list candidate corresponding to each PSFCH is $N_s = \max\{2^{uUL-uSL}, 1\}$. For example, in (a) in FIG. 16, using an example in which a Uu SCS is 15 kHz (uUL=0) and a PC5 SCS is 30 kHz (uSL=1), each candidate in the time gap list corresponds to one slot. In (b) in FIG. 16, using an example in which a Uu SCS is 30 kHz (uUL=1) and a PC5 SCS is 15 kHz (uSL=0), the quantity of slots corresponding to the PDSCH time gap list candidate corresponding to each PSFCH is $N_s = \max\{2^{uUL-uSL}, 1\}=2$.

After a HARQ codebook size is determined for the PSFCH, a frequency domain resource of HARQ-ACK information of each PDSCH needs to be further determined. For example, a PSFCH PRB used to transmit HARQ-ACK information of a PDSCH may be separately configured, or may be shared with the PSSCH, including the following two manners (the following manner 4.1 and manner 4.2).

Manner 4.1: A PSFCH PRB used to transmit HARQ-ACK information of a PDSCH is separately configured. That is, the first transmission resource is dedicated to transmitting HARQ-ACK information of downlink data.

Specifically, the network device configures, by using higher layer signaling (for example, an RRC message), a frequency domain resource used to carry the PDSCH, for example, a PRB resource. For example, a parameter #1, such as a sl-PSFCH-RB-Set-PDSCH parameter, is added to the higher layer signaling, to indicate a PRB for transmitting HARQ-ACK information of the PDSCH, which is denoted as a resource $M_{PRB,set}^{PDSCH,PSFCH}$ (denoted as K in the following).

In a possible implementation, the parameter #1 may be in a form of a bitmap, as shown in the following: sl-PSFCH-RB-Set-PDSCH BIT STRING(SIZE(10...275))

The bit string represents a bitmap, and a length of the bit string may be 10 to 275 bits. Each bit represents whether a PRB at a corresponding position can be used for the PSFCH, and calculation starts from a least-significant-bit RB index of a resource pool. A bit '0' represents that a corresponding PRB is not used for the PSFCH, and a bit '1' represents that a corresponding PRB is used for the PSFCH.

For example, the parameter includes 10 bits, that is, it indicates that the dedicated PSFCH may include 10 consecutive PRBs calculated from a least-significant-bit PRB index of a resource pool in which the PSFCH is located, but not all PRBs may be used for the PSFCH. For example, when the 10 bits are '1100111000', it indicates that the third, fourth, eighth, ninth, and tenth PRBs in the 10 consecutive PRBs calculated from the least-significant-bit PRB index of the resource pool in which the PSFCH is located are not used for the PSFCH, or the PSFCH does not include these PRBs.

For example, a left (or a most significant bit (most significant bit, MSB)) in the bit sequence corresponds to an index of a lowest PRB in the resource pool. The resource pool in which the PSFCH is located may be determined by using another parameter, for example, may be configured by using sl-ResourcePool signaling of an RRC message of a base station, and sl-PSFCH-RB-Set-PDSCH may be used as a parameter of the signaling.

Compared with that the PSFCH index depends on the index of the lowest RB in the resource pool, the RB index of the independently configured PSFCH may also be calculated starting from a highest RB index of an existing PSFCH resource, that is, in frequency domain, a lowest RB index of a PRB of a PSFCH used to transmit HARQ-ACK information of a PDSCH is greater than a highest RB index of a PSFCH used to carry HARQ-ACK information of a PSSCH.

For example, the lowest RB index of the PRB of the PSFCH for transmitting the HARQ-ACK information of the PDSCH is a next adjacent index of the highest RB index of the existing PSFCH for carrying the HARQ-ACK information of the PSSCH. For example, a quantity of RBs allocated to the existing PSFCH is 100, that is, 100 bits are respectively used to indicate RB indices of the PSFCH, for example, 0 to 99. An index used to carry the HARQ-ACK information of the PDSCH may start from an RB whose index is 100. In this case, the PSFCH carrying the HARQ-ACK information of the PDSCH may also use the foregoing bitmap form, but a start reference position of the index changes. In this case, PRBs of the PSFCH may be inconsecutive.

In another possible implementation, the PSFCH carrying the HARQ-ACK information of the PDSCH is configured as a group of consecutive PRBs, as shown in the following:

sl-PSFCH-RB-Set-PDSCH ENUMERATED{10, 20, 30, 40, 50, 60, 70, ...} OPTIONAL

10, 20, and the like each represent a quantity of RBs available for the PSFCH, and may indicate a segment of consecutive RBs. A start index of an RB is a value next to a highest index of an RB of a PSFCH (if configured) for transmitting a PSSCH HARQ, or is calculated starting from a lowest index in the resource pool, for example, 0.

After the PRB resource of the PSFCH is determined, a PRB resource corresponding to each PDSCH in PDSCHs whose HARQ-ACK information is transmitted through the same PSFCH may be further determined, including the following steps.

Step 1: According to the foregoing description, for each PSFCH used to carry HARQ-ACK information of a PDSCH, a PDSCH transmission opportunity set M corresponding to the PSFCH may be obtained (for example, the transmission opportunity set M is determined in the foregoing manner 3.2.1, manner 3.2.2, or manner 3.2.3).

Step 2: A resource (PRB) K of the PSFCH is divided into a plurality of PRB subsets based on the PDSCH transmission opportunity set, where each PRB subset is used to transmit HARQ-ACK information of a PDSCH in one PDSCH set.

Step 3: A PRB subset $M_{PDSCH}^{PSFCH}$ (denoted as N in the following) occupied by each PDSCH may be obtained by using a formula $N = \lfloor K/M \rfloor$, where $\lfloor \cdot \rfloor$ is a floor operation.

For example, as shown in FIG. 17, if a total quantity of PRBs of the PSFCH for transmitting the HARQ-ACK information of the PDSCH is configured as $K = 10$ according to the higher layer signaling, and the PDSCH transmission opportunity set is M = 2, each PDSCH transmission opportunity may correspond to five PRBs. Alternatively, a rounding operation may not be performed, and $N = K/M$. In this case, it is required that M is divisible by K.

Because only one PRB is required to transmit the HARQ-ACK information of the PDSCH, when a plurality of PRBs of the PSFCH are used to transmit HARQ-ACK information of one PDSCH, a PRB on which the 1-bit HARQ-ACK information is located is specified.

In a possible implementation, it may be specified that HARQ-ACK information of a PDSCH is in a PRB with a lowest index number in a PRB subset. For example, HARQ-ACK information of a PDSCH 0 is transmitted on a PRB 0, and HARQ-ACK information of a PDSCH 1 is transmitted on a PRB 5. In this way, the PRB 0 and the PRB 5 are separated by four PRBs, thereby effectively avoiding interference to PSFCH decoding caused by in-band leakage.

In another possible implementation, the HARQ-ACK information of the PDSCH may alternatively be in a PRB with a highest index number in each PRB subset.

In another possible implementation, the HARQ-ACK information of the PDSCH may alternatively be in a random PRB in each PRB subset. In this case, a receive end needs to blindly detect each PRB in a PRB subset of each PSFCH, to determine whether HARQ-ACK information exists.

Optionally, in step 3, N may alternatively be obtained in another manner. For example, M is the PDSCH transmission opportunity set, K is a PRB set for transmitting the HARQ-ACK information of the PDSCH, a remainder of M1=K/M is defined, K1 is ceil($K/M$2), K2 is floor($K/M$2), and M2=min($M, K$).

For an $m^{th}$ PDSCH transmission opportunity, when M1>0, if m is an integer from 1 to M1, PRB index numbers corresponding to HARQ-ACK information of an $m^{th}$ PDSCH are (m-1)*K1 to m*K1-1. It should be understood that the index numbers are relative index numbers in the PRB set.

When a value of m is any integer in M1+1 to M, PRB index numbers for a HARQ feedback in an $m^{th}$ PDSCH transmission opportunity are M1*K1+(m-M1-1)*K2+k2 (a value of k2 is an integer from 0 to K2-1), that is, M1*K1+(m-M1-1)*K2 to M1*K1+(m-M1-1)*K2+K2-1.

For example, $M = 3$ and $K = 11$ are used as an example, M2=3, M1=2, K1=4, and K2=3. Because M1>0, for the first to M1$^{th}$ PDSCH transmission opportunities, corresponding PRB relative index numbers are (m-1)*K1 to m*K1-1. For example, for an (m=1)$^{th}$ PDSCH, PRB relative index numbers are 0 to 3. For m=2, PRB index numbers are 4 to 7. For m=3, PRB relative index numbers are M1*K1+(m-M1-1)*K2 to M1*K1+(m-M1-1)*K2+K2-1, that is, 8 to 10.

It should be noted that the index may not be an absolute index value of a PRB, but a relative index value. For example, when configured PSFCH PRB indices include 11 PRBs 10, 11, 12, 15, 16, 17, 25, 35, 54, 76, and 99, the index 0 in the foregoing formula may be understood as 10 herein, and the index 5 in the foregoing formula may be understood as 17 herein, that is, PRBs of the first PDSCH are 10, 11, 12, and 15, and so on.

Optionally, if M2=M, min($M, K$)=M. In the case shown in manner 4.1, M, the first resource block quantity, and the second resource block quantity satisfy the following relationship, and the following possible implementations of concluded.

In a possible implementation, M, the first resource block quantity, and the second resource block quantity satisfy the following relationship:

$$N = \left\lfloor \frac{K}{M} \right\rfloor$$

where N represents the second resource block quantity, K represents the first resource block quantity, ⌊ ⌋ represents a floor operation, and N resource blocks corresponding to an m$^{th}$ piece of downlink data in the M pieces of downlink data are resource blocks whose indices are (m-1)*N to m*N-1 in K resource blocks;
or
M, the first resource block quantity, and the second resource block quantity satisfy the following relationship:

$$N = \frac{K}{M}$$

where M is divisible by K, and N resource blocks corresponding to an m$^{th}$ piece of downlink data in the M pieces of downlink data are resource blocks whose indices are (m-1)*N to m*N-1 in K resource blocks;
or
if M1>0, when m is any integer from 1 to M1, N resource blocks corresponding to an m$^{th}$ piece of downlink data in the M pieces of downlink data are resource blocks whose indices are (m-1)*K1 to m*K1-1 in K resource blocks, or when m is any integer from M1 to M, N resource blocks corresponding to an m$^{th}$ piece of downlink data in the M pieces of downlink data are an [M1*K1+(m-M1-1)*K2]$^{th}$ resource block to an [M1*K1+(m-M1-1)*K2+K2-1]$^{th}$ resource block in K resource blocks; or
if M1=0, N resource blocks corresponding to an m$^{th}$ piece of downlink data in the M pieces of downlink data are an [M1*K1+(m-M1-1)*K2]$^{th}$ resource block to an [M1*K1+(m-M1-1)*K2+K2-1]$^{th}$ resource block in K resource blocks, where

K1 is $\left\lceil \dfrac{K}{M} \right\rceil$, K2 is $\left\lfloor \dfrac{K}{M} \right\rfloor$, M1 is a remainder of $\dfrac{K}{M}$, and | | represents a ceiling operation.

A PSFCH PRB corresponding to each PDSCH transmission opportunity may be determined by using the foregoing steps. However, it should be understood that the PDSCH transmission opportunity does not necessarily indicate that the network device performs scheduling at these times. Therefore, a case in which a PDSCH does not appear in some PDSCH transmission opportunities (for example, no DCI is detected: the network device does not send the DCI or the first terminal device misses detecting the DCI) may occur. When the first terminal device correctly decodes the PDSCH in the PDSCH transmission opportunity, the first terminal device transmits the ACK on the corresponding PSFCH PRB; otherwise, when the first terminal device does not correctly decode the PDSCH in the PDSCH transmission opportunity (for example, no DCI is received or the PDSCH fails to be decoded), the first terminal device transmits a NACK on the corresponding PSFCH PRB.

Manner 4.2: A shared PSFCH is used to transmit HARQ-ACK information of a PDSCH and transmit HARQ-ACK information of a PSSCH. That is, the first transmission resource is used to transmit HARQ-ACK information of downlink data and HARQ-ACK information of sidelink data.

In this implementation, the PSFCH carrying the HARQ-ACK information of the PDSCH may be directly multiplexed with the resource pool of the PSSCH, that is, the PSFCH and the PSSCH share the resource pool. In other words, for the PRB of the PSFCH, the PRB is allocated to the PDSCH and the PSSCH according to PDSCH and PSSCH transmission opportunity sets.

Step 1: Determine a quantity $N_{\text{subch}} \cdot N_{\text{PSSCH}}^{\text{PSFCH}}$ of subchannels corresponding to one PSFCH slot.

Step 2: Determine a PDSCH transmission opportunity set $M_A^{\text{PDSCH}}$ (which may be denoted as M below) corresponding to one PSFCH slot.

Therefore, each PSSCH subchannel/PDSCH transmission opportunity corresponds to $M_{\text{PDSCH}}^{\text{PSFCH}} = M_{\text{subch,slot}}^{\text{PSFCH}} = \lfloor M_{\text{PRB,set}}^{\text{PSFCH}} / (N_{\text{subch}} \cdot N_{\text{PSSCH}}^{\text{PSFCH}} + M_A^{\text{PDSCH}}) \rfloor$, where $M_{\text{PRB,set}}^{\text{PSFCH}}$ is a quantity of configured PSFCH PRBs (denoted as K below); or each PSSCH subchannel/PDSCH transmission opportunity corresponds to $M_{\text{PDSCH}}^{\text{PSFCH}} = M_{\text{subch,slot}}^{\text{PSFCH}} = M_{\text{PRB,set}}^{\text{PSFCH}} / (N_{\text{subch}} \cdot N_{\text{PSSCH}}^{\text{PSFCH}} + M_A^{\text{PDSCH}})$, and in this case, it is required that $M_{\text{PRB,set}}^{\text{PSFCH}}$ is divisible by ( $N_{\text{subch}} \cdot N_{\text{PSSCH}}^{\text{PSFCH}} + M_A^{\text{PDSCH}}$ ).

Step 3: Allocate PRBs from low indices to high indices in a sequence of first PSSCH and then PDSCH (or first PDSCH and then PSSCH). For example, a PSFCH PRB set includes 12 PRBs, corresponding to two PSSCH subchannels and two PDSCH transmission opportunities. As shown in FIG. 18, each PSSCH subchannel/PDSCH transmission opportunity corresponds to three PRBs, and PRBs 0 to 5 are used to transmit HARQ-ACK information of the PSSCH, and PRBs 6 to 11 are used to transmit a HARQ of the PDSCH.

Optionally, in the case shown in manner 4.2, M, the first resource block quantity, the second resource block quantity, and a second quantity satisfy the following relationship:

$$N = \left\lfloor \frac{K}{M+A} \right\rfloor$$

where N represents the second resource block quantity, K represents the first resource block quantity, A represents the second quantity, the second quantity is a quantity of HARQ-ACK information that is of the sidelink data and that is transmitted on the PSFCH, $\lfloor \rfloor$ represents a floor operation, and N resource blocks corresponding to an $m^{th}$ piece of downlink data in the M pieces of downlink data and A pieces of sidelink data are resource blocks whose indices are $(m-1)*N$ to $m*N-1$ in K resource blocks;

or

M, the first resource block quantity, the second resource block quantity, and a second quantity satisfy the following relationship:

$$N = \frac{K}{M+A}$$

where M+A is divisible by K, and N resource blocks corresponding to an $m^{th}$ piece of downlink data in the M pieces of downlink data and A pieces of sidelink data are resource blocks whose indices are $(m-1)*N$ to $m*N-1$ in K resource blocks;

or

if M1>0, when m is any integer from 1 to M1, N resource blocks corresponding to an $m^{th}$ piece of downlink data in the M pieces of downlink data and A pieces of sidelink data are resource blocks whose indices are $(m-1)*K1$ to $m*K1-1$ in K resource blocks, or when m is any integer from M1 to M, N resource blocks corresponding to an $m^{th}$ piece of downlink data in the M pieces of downlink data are an $[M1*K1+(m-M1-1)*K2]^{th}$ resource block to an $[M1*K1+(m-M1-1)*K2+K2-1]^{th}$ resource block in K resource blocks; or

if M1=0, N resource blocks corresponding to an $m^{th}$ piece of downlink data in the M pieces of downlink data and A pieces of sidelink data are an $[M1*K1+(m-M1-1)*K2]^{th}$ resource block to an $[M1*K1+(m-M1-1)*K2+K2-1]^{th}$ resource block in K resource blocks, where

K1 is $\left\lceil \frac{K}{M+A} \right\rceil$, K2 is $\left\lfloor \frac{K}{M+A} \right\rfloor$, M1 is a remainder of $\frac{K}{M+A}$, , and $\lceil\rceil$ represents a ceiling operation.

In the resource configuration manners shown in FIG. 8 and FIG. 10, a case in which the first terminal device transmits the HARQ-ACK information of the PDSCH to the second terminal device through PC5 is mainly considered. For example, only one pair of XR glasses transmit the HARQ-ACK information of the PDSCH through PC5.

Further, in a scenario in which a plurality of first terminal devices exist in a specific range and need to forward HARQ-ACK information of a PDSCH through PC5, the network device separately schedules a PDSCH for the plurality of first terminal devices in a same slot through the first link, and the plurality of first terminal devices may perform PSFCH transmission on a same PRB in a same PSFCH subset. Consequently, interference is caused, and a receive end cannot restore information sent by any first terminal device. Transmission interference between a plurality of first terminal devices may be avoided in the following manners.

In a possible implementation, the network device configures a different dedicated PSFCH PRB for each of the plurality of first terminal devices, and the PSFCH PRBs are independent of each other. When a quantity of first terminal devices that need PC5 to transmit HARQ-ACK information of a PDSCH increases, a quantity of required PRBs also increases, and a waste of PRB resources may be caused.

In another possible implementation, the network device semi-statically configures a PRB index for each first terminal device by using higher layer signaling, to indicate a PRB in a PSFCH PRB subset on which HARQ-ACK information of a PDSCH is transmitted by the first terminal device. For example, in FIG. 17, the network device separately schedules PDSCHs for UE #0 and UE #1 in a slot D0. If a PRB index of the UE #0 is configured as 0 and a PRB index of the UE #1 is configured as 2 by using higher layer signaling, it is determined, based on the PRB indices, that HARQ-ACK information of a PDSCH of the UE 0 is transmitted on the PRB 0, and HARQ-ACK information of a PDSCH of the UE #1 is transmitted on the PRB 2.

In another possible implementation, HARQ-ACK information of PDSCHs of a plurality of first terminal devices may be transmitted by using a group of PRBs in a code division multiplexing manner. SCI for sending a PSSCH indicates a PID and an MID, which respectively indicate IDs of sending UE and receiving UE. A PRB index is obtained according to a formula $(P_{ID} + M_{ID})$ mod $R_{PRB,CS}^{PSFCH}$, to determine a position of a PRB corresponding to the HARQ-ACK information of the PSSCH.

However, because there is no SCI when the PSFCH corresponding to the PDSCH is sent, the PID and the MID cannot be determined according to the conventional technology, and $R_{PRB,CS}^{PSFCH}$ cannot be obtained. Therefore, a manner needs to be changed. For example, compared with a manner of obtaining a PRB index by using a formula, the higher layer signaling may semi-statically configure a PRB index for each first terminal device, and the index may directly indicate a PRB on which HARQ-ACK information of a PDSCH of the UE is transmitted.

For example, the network device adds, for the first terminal device by using higher layer signaling (for example, RRC signaling), a parameter indicating a PSFCH PRB index, for example, sl-PDSCH-to-PSFCH-PRB-Index, and determines, in a manner of frequency domain first and then code domain, that a fifth PRB in a PRB set is used to carry a HARQ-ACK information feedback of a PDSCH of the glasses.

For example, FIG. 19 is used as an example. When sl-PDSCH-to-PSFCH-PRB-Index=5, a PRB whose index is 5 (that is, a PRB $0_1$) is used to transmit HARQ-ACK information of the PDSCH in a sequence of frequency domain first and then code domain. In addition, a code domain size $N_{CS}^{PSFCH}$ in FIG. 19 may also be understood as a quantity of shift pairs, and this parameter may be configured by the network device by using higher layer signaling. In this manner, the PRB of the PSFCH may be multiplexed to a plurality of first terminal devices.

When sl-PDSCH-to-PSFCH-PRB-Index is also configured for the second terminal device, the second terminal device may determine, based on the parameter, a PSFCH PRB on which detection is to be performed, so as to prevent the second terminal device from blindly detecting all PRBs. Because there may be a scenario in which one second terminal device forwards HARQ-ACK information of PDSCHs of a plurality of first terminal devices, sl-PDSCH-to-PSFCH-PRB-IndexList may be configured for the second terminal device to indicate a plurality of PRB indices, and the second terminal device may determine, based on an indication of the list, a PRB for transmitting the HARQ-ACK information of the PDSCH.

In another possible implementation, the HARQ-ACK information of the PDSCH of the UE is multiplexed into a same group of PSFCHs in a CDM manner.

First, the network device configures a PSFCH transmission resource $M_{PRB,set}^{PDSCH,PSFCH}$ and a cyclic shift pair $N_{CS}^{PSFCH}$ of the PSFCH for the first terminal device by using higher layer signaling, to determine a PSFCH transmission resource set $R_{PRB,CS}^{PDSCH,PSFCH}$, that is, a total quantity of available PRB resources. As shown in FIG. 20, $M_{PRB,set}^{PDSCH,PSFCH} = 10\ PRBs$ PRBs are configured for one PSFCH to transmit HARQ data of a PDSCH, and a quantity $N_{CS}^{PSFCH} = 3$ of cyclic shift pairs is configured by using higher layer signaling. Therefore, there are $M_{PRB,set}^{PDSCH,PSFCH} * N_{CS}^{PSFCH} = 30$ transmission resources in total that can be used to transmit HARQ-ACK information of the PDSCH, and the transmission resources correspond to PRB index numbers 0 to 29. For example, sorting is performed in a manner of frequency domain first and then time domain.

For example, the network device configures an index for each first terminal device, to transmit HARQ-ACK information of a PDSCH, and the PDSCH of the first terminal device is transmitted on a PRB corresponding to the index.

Alternatively, considering that one PSFCH corresponds to a plurality of PDSCH transmission opportunities, a group of indices or an index list may be configured, and a quantity of elements in the list may be consistent with a quantity of elements in the PDSCH transmission opportunity set, so that each PDSCH has a corresponding PRB index.

Alternatively, a quantity of elements in the list may not be limited, and PDSCH transmission opportunities correspond to indices in the list in turn. For example, a quantity of PDSCH transmission opportunities is 3, and the index list includes two indices. Therefore, the first PDSCH transmission opportunity corresponds to the first index in the index list, the second PDSCH corresponds to the second index, and the third PDSCH corresponds to the third index in turn.

Alternatively, a PRB corresponding to each PDSCH transmission opportunity is determined based on information such as a send UE ID and a receiving UE ID. Each PSFCH may correspond to a plurality of PDSCH transmission opportunities. Therefore, the PDSCH transmission opportunity also needs to be considered as a PRB selection.

In the scenario in FIG. 2, a PRB corresponding to a PDSCH transmission opportunity of any XR glasses is determined by an ID of the XR glasses, an ID of the mobile phone, and the PDSCH transmission opportunity.

Specifically, the PDSCH transmission opportunity may be determined in a semi-static manner shown in the foregoing manner 3.2.1: For example, after the PDSCH transmission opportunity set is determined according to the PSFCH period and SCSs of Uu and PC5, sorting is performed based on a sequence (for example, a time sequence, which may be a descending order or an ascending order of time gaps from the PSFCH) and a corresponding index is allocated.

Alternatively, the PDSCH transmission opportunity may be determined based on higher layer signaling as shown in the foregoing manner 3.2.2: For example, after the PDSCH transmission opportunity set is determined based on the time gap between the PDSCH and the PSFCH, a corresponding index is allocated.

Alternatively, the PDSCH transmission opportunity may be indicated by the network device by using the fourth information shown in the foregoing manner 3.2.3: For example, when the DCI explicitly indicates the DAI, a transmission opportunity index may reference the DAI information in the DCI. For example, the DAI is directly reused as the PDSCH transmission opportunity index.

An ID (denoted as $T_{ID}$) of the XR glasses TID and an ID (denoted as $R_{ID}$) of the mobile phone may be obtained by using higher layer signaling. For example, the network device separately configures IDs for the XR glasses and the mobile phone by using higher layer signaling (for example, an RRC message), and a PRB index corresponding to the PDSCH may be obtained according to the formula: $(T_{ID}+R_{ID}+i_{PDSCH}) \mod R_{PRB,CS}^{PDSCH,PSFCH}$, where $i_{PDSCH}$ may be understood as a sequence number in the PDSCH transmission set.

It should be understood that sequence numbers of the foregoing processes do not mean a sequence of execution. The sequence of execution of the processes should be determined according to functions and internal logic of the processes, and should not constitute any limitation on an implementation process of embodiments of this application.

It should be further understood that in embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It should be further understood that in some of the foregoing embodiments, a device in an existing network architecture is mainly used as an example for description (for example, a network device or a terminal device). It should be understood that a specific form of the device is not limited in embodiments of this application. For example, all devices that can implement a same function in the future are applicable to embodiments of this application.

It may be understood that, in the foregoing method embodiments, methods and operations implemented by a device (for example, the network device or the terminal device) may also be implemented by a component (for example, a chip or a circuit) of the device.

The communication method provided in embodiments of this application is described in detail above with reference to FIG. 7 to FIG. 20. The foregoing communication method is mainly described from a perspective of interaction between the terminal device and the network device. It may be understood that, to implement the foregoing functions, the terminal device and the network device include corresponding hardware structures and/or software modules for performing the functions.

A person skilled in the art should be aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The communication apparatus provided in this application is described below in detail with reference to FIG. 21 and FIG. 23. It should be understood that descriptions of apparatus embodiments correspond to descriptions of the method embodiments. Therefore, for content that is not described in detail, refer to the foregoing method embodiments. For brevity, some content is not described again.

In embodiments of this application, a transmit end device or a receive end device may be divided into functional modules according to the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. During actual implementation, there may be another division manner. An example in which each functional module is obtained through division based on each corresponding function is used below for description.

FIG. 21 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, so that the apparatus implements an action of a device in the foregoing method embodiments.

In a design, the apparatus 10 may correspond to the first terminal device in the foregoing method embodiments, or may be a component (for example, a chip) of the first terminal device.

The apparatus 10 may implement corresponding steps or procedures performed by the terminal device in the foregoing method embodiments. The transceiver module 11 may be configured to perform receiving and sending related operations of the first terminal device in the foregoing method embodiments. The processing module 12 may be configured to perform a processing related operation of the first terminal device in the foregoing method embodiments.

In a possible implementation, the transceiver module 11 is configured to receive first downlink data from a network device through a first link; the processing module 12 is configured to decode the first downlink data to obtain a first decoding result; and the transceiver module 11 is further configured to send first information to a second terminal device through a second link, where the first information includes first hybrid automatic repeat request acknowledgement HARQ-ACK information, and the first HARQ-ACK information indicates the first decoding result. The first link is a transmission link between the first terminal device and the network device, and the second link is a transmission link between the first terminal device and the second terminal device.

When the apparatus 10 is configured to perform the method in FIG. 7, the transceiver module 11 may be configured to perform steps of receiving and sending information in the method, for example, steps S710 and S730; and the processing module 12 may be configured to perform a processing step in the method, for example, step S720.

When the apparatus 10 is configured to perform the method in FIG. 8, the transceiver module 11 may be configured to perform steps of receiving and sending information in the method, for example, steps S811, S810, S821, and S822; and the processing module 12 may be configured to perform a processing step in the method.

When the apparatus 10 is configured to perform the method in FIG. 10, the transceiver module 11 may be configured to perform steps of receiving and sending information in the method, for example, steps S1010 and S1021; and the processing module 12 may be configured to perform a processing step in the method, for example, step S1022.

In another design, the apparatus 10 may correspond to the network device in the foregoing method embodiments, or may be a component (for example, a chip) of the network device.

The apparatus 10 may implement corresponding steps or procedures performed by the network device in the foregoing method embodiments. The transceiver module 11 may be configured to perform receiving and sending related operations of the network device in the foregoing method embodiments. The processing module 12 may be configured to perform a processing related operation of the network device in the foregoing method embodiments.

In a possible implementation, the transceiver module 11 is configured to send first downlink data to a first terminal device through a first link; and the transceiver module 11 is configured to receive fifth information from the second terminal device through a third link, where the fifth information includes first hybrid automatic repeat request acknowledgement HARQ-ACK information, and the first HARQ-ACK information indicates a first decoding result corresponding to the first downlink data.

When the apparatus 10 is configured to perform the method in FIG. 7, the transceiver module 11 may be configured to perform steps of receiving and sending information in the method, for example, steps S710 and S740; and the processing module 12 may be configured to perform a processing step in the method.

When the apparatus 10 is configured to perform the method in FIG. 8, the transceiver module 11 may be configured to perform steps of receiving and sending information in the method, for example, steps S811, S810, S821, and S822; and the processing module 12 may be configured to perform a processing step in the method.

When the apparatus 10 is configured to perform the method in FIG. 10, the transceiver module 11 may be configured to perform steps of receiving and sending information in the method, for example, steps S1010 and S1021; and the processing module 12 may be configured to perform a processing step in the method.

It should be understood that a specific process in which the units perform the foregoing corresponding steps is described in detail in the foregoing method embodiments. For brevity, details are not described herein.

It should be understood that the apparatus 10 herein is embodied in a form of a functional module. The term "module" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in the foregoing solutions has a function of implementing corresponding steps performed by the device (for example, the terminal device or the network device) in the foregoing methods. The function may be implemented by using hardware, or may be implemented by using hardware executing corresponding software. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform sending and receiving operations and a related processing operation in the method embodiments.

In addition, the transceiver module 11 may alternatively be a transceiver circuit (for example, the transceiver circuit may include a receiver circuit and a transmitter circuit), and the processing module may be a processing circuit.

FIG. 22 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 22, the apparatus 20 further includes the memory 22. The memory 22 is configured to store the computer program or instructions and/or data. The memory 22 and the processor 21 may be integrated together, or may be disposed separately. Optionally, there are one or more memories 22.

Optionally, as shown in FIG. 22, the apparatus 20 further includes a transceiver 23. The transceiver 23 is configured to receive a signal and/or send a signal. For example, the processor 21 is configured to control the transceiver 23 to receive a signal and/or send a signal.

In a solution, the apparatus 20 is configured to implement operations performed by the terminal device in the foregoing method embodiments.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification aims to include but is not limited to these memories and any memory of another proper type.

FIG. 23 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the terminal device in the foregoing method embodiments.

For example, the logic circuit 31 is configured to implement processing related operations performed by the terminal device in the foregoing method embodiments, and the input/output interface 32 is configured to implement sending and/or receiving related operations performed by the terminal device in the foregoing method embodiments.

An embodiment of this application further provides a computer-readable storage medium. The computer-readable storage medium stores computer instructions used to implement the method performed by the device in the foregoing method embodiments. For example, when the computer program is executed by a computer, the computer is enabled to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system, including the foregoing terminal device and network device.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving, by a first terminal device, first downlink data from a network device through a first link;
   decoding, by the first terminal device, the first downlink data to obtain a first decoding result; and
   sending, by the first terminal device, first information to a second terminal device through a second link, wherein the first information comprises first hybrid automatic repeat request acknowledgement HARQ-ACK information, and the first HARQ-ACK information indicates the first decoding result, wherein
   the first link is a transmission link between the first terminal device and the network device, and the second link is a transmission link between the first terminal device and the second terminal device.

2. The method according to claim 1, wherein before sending, by the first terminal device, the first information to the second terminal device through the second link, the method further comprises:
determining, by the first terminal device, a first time unit in which the first terminal device sends the first information.

3. The method according to claim 2, wherein determining, by the first terminal device, the first time unit in which the first terminal device sends the first information is sent comprises:

determining, by the first terminal device, a first time gap, wherein the first time gap is less than or equal to a time gap between the first time unit and a second time unit; and
determining, by the first terminal device, the first time unit based on the first time gap and the second time unit, wherein
the second time unit is a time unit in which the first terminal device receives the first downlink data or a time unit in which the first terminal device receives first control information, and the first control information is used to schedule the first downlink data.

4. The method according to claim 3, wherein determining, by the first terminal device, the first time gap comprises:

receiving, by the first terminal device, the first control information from the network device, wherein the first control information further indicates the first time gap; or
before receiving the first downlink data, receiving, by the first terminal device, first configuration information from the network device, and determining the first time gap based on the first configuration information.

5. The method according to claim 4, wherein before receiving, by the first terminal device, the first control information from the network device, the method further comprises:
receiving, by the first terminal device, second configuration information from the network device, wherein the second configuration information is used to configure a time gap set, and the first time gap is one time gap in the time gap set.

6. The method according to any one of claims 3 to 5, wherein when the first time gap is measured in slots, determining, by the first terminal device, the first time gap further comprises:
determining, by the first terminal device, that a subcarrier spacing SCS referenced by the first time gap is a first SCS or a second SCS, wherein the first SCS is an SCS corresponding to the first link, the second SCS is an SCS corresponding to the second link, and the first link is different from the second link.

7. The method according to claim 6, wherein determining, by the first terminal device, that the SCS referenced by the first time gap is the first SCS or the second SCS comprises:

determining, by the first terminal device based on a first parameter, that the SCS referenced by the first time gap is the first SCS or the second SCS, wherein the first parameter indicates the first SCS or the second SCS, wherein the first parameter is configured by the network device, the first parameter is determined by the first terminal device and the network device through negotiation, or the first parameter is preprogrammed into the first terminal device.

8. The method according to any one of claims 2 to 7, wherein the method further comprises:
determining, by the first terminal device, a first transmission resource, wherein the first transmission resource is used to transmit the first information, the first transmission resource comprises a first time domain resource and a first frequency domain resource, and the first time domain resource is in the first time unit.

9. The method according to claim 8, wherein the first transmission resource is a physical sidelink shared channel PSSCH, and determining, by the first terminal device, the first transmission resource comprises:

receiving, by the first terminal device, the first control information from the network device, wherein the first control information comprises second information, and the second information indicates the first time domain resource and the first frequency domain resource; and
determining, by the first terminal device, the first transmission resource based on the second information; or
determining, by the first terminal device, the first time domain resource and the first frequency domain resource based on third configuration information, wherein the third configuration information is information received by the first terminal device from the network device before the first terminal device receives the first downlink data.

10. The method according to claim 9, wherein the second information comprises a first field and a second field, the first field indicates time resource assignment, and the second field indicates frequency resource assignment.

11. The method according to claim 9, wherein the third configuration information comprises information indicating a quantity of subchannels, information indicating a subchannel size, information indicating a start resource block of a subchannel, information indicating a start symbol of the first time domain resource in the first time unit, and information indicating a quantity of symbols occupied by the first time domain resource.

12. The method according to any one of claims 9 to 11, wherein the first information is a media access control control element MAC CE.

13. The method according to claim 8, wherein the first frequency domain resource is a resource block occupied by a physical sidelink feedback channel PSFCH, and determining, by the first terminal device, the first transmission resource comprises:

receiving, by the first terminal device, the first control information from the network device, wherein the first control information comprises third information, and the third information indicates the first frequency domain resource; and
determining, by the first terminal device, the first frequency domain resource based on the third information.

14. The method according to claim 8, wherein the first frequency domain resource is a resource block comprised in a physical sidelink feedback channel PSFCH, and determining, by the first terminal device, the first transmission resource comprises:

determining, by the first terminal device, a first quantity M of downlink data in a first downlink data set, wherein the first downlink data is one of the M pieces of downlink data, M pieces of HARQ-ACK information corresponding to the M pieces of downlink data are all transmitted on the PSFCH, and M is a positive integer;
determining, by the first terminal device, a second resource block quantity based on the first quantity and a first resource block quantity, wherein the first resource block quantity is a quantity of resource blocks comprised in the PSFCH, and the second resource block quantity is a quantity of resource blocks comprised in the first frequency domain resource; and
determining, by the first terminal device, a position of the second resource block quantity in the first resource block quantity based on a position of the first downlink data in the downlink data set.

15. The method according to claim 14, wherein the first transmission resource is used to transmit HARQ-ACK information of downlink data.

16. The method according to claim 15, wherein M, the first resource block quantity, and the second resource block quantity satisfy the following relationship:

$$N = \left\lfloor \frac{K}{M} \right\rfloor$$

wherein N represents the second resource block quantity, K represents the first resource block quantity, $\lfloor \ \rfloor$ represents a floor operation, and N resource blocks corresponding to an $m^{th}$ piece of downlink data in the M pieces of downlink data are resource blocks whose indices are (m-1)*N to m*N-1 in K resource blocks;
or
M, the first resource block quantity, and the second resource block quantity satisfy the following relationship:

$$N = \frac{K}{M}$$

wherein M is divisible by K, and N resource blocks corresponding to an $m^{th}$ piece of downlink data in the M pieces of downlink data are resource blocks whose indices are (m-1)*N to m*N-1 in K resource blocks;
or

if M1>0, when m is any integer from 1 to M1, N resource blocks corresponding to an $m^{th}$ piece of downlink data in the M pieces of downlink data are resource blocks whose indices are (m-1)*K1 to m*K1-1 in K resource blocks, or when m is any integer from M1 to M, N resource blocks corresponding to an $m^{th}$ piece of downlink data in the M pieces of downlink data are an $[M1*K1+(m-M1-1)*K2]^{th}$ resource block to an $[M1*K1+(m-M1-1)*K2+K2-1]^{th}$ resource block in K resource blocks; or

if M1=0, N resource blocks corresponding to an $m^{th}$ piece of downlink data in the M pieces of downlink data are an $[M1*K1+(m-M1-1)*K2]^{th}$ resource block to an $[M1*K1+(m-M1-1)*K2+K2-1]^{th}$ resource block in K resource blocks, wherein

K1 is $\left\lceil \dfrac{K}{M} \right\rceil$ , K2 is $\left\lfloor \dfrac{K}{M} \right\rfloor$ , M1 is a remainder of $\dfrac{K}{M}$, and | | represents a ceiling operation.

17. The method according to claim 14, wherein the first transmission resource is used to transmit HARQ-ACK information of downlink data and HARQ-ACK information of sidelink data.

18. The method according to claim 17, wherein M, the first resource block quantity, the second resource block quantity, and a second quantity satisfy the following relationship:

$$N = \left\lfloor \frac{K}{M+A} \right\rfloor$$

wherein N represents the second resource block quantity, K represents the first resource block quantity, A represents the second quantity, the second quantity is a quantity of HARQ-ACK information that is of the sidelink data and that is transmitted on the PSFCH, └ ┘ represents a floor operation, and N resource blocks corresponding to an $m^{th}$ piece of downlink data in the M pieces of downlink data and A pieces of sidelink data are resource blocks whose indices are (m-1)*N to m*N-1 in K resource blocks;
or

M, the first resource block quantity, the second resource block quantity, and a second quantity satisfy the following relationship:

$$N = \frac{K}{M+A}$$

wherein M+A is divisible by K, and N resource blocks corresponding to an $m^{th}$ piece of downlink data in the M pieces of downlink data and A pieces of sidelink data are resource blocks whose indices are (m-1)*N to m*N-1 in K resource blocks;
or

if M1>0, when m is any integer from 1 to M1, N resource blocks corresponding to an $m^{th}$ piece of downlink data in the M pieces of downlink data and A pieces of sidelink data are resource blocks whose indices are (m-1)*K1 to m*K1-1 in K resource blocks, or when m is any integer from M1 to M, N resource blocks corresponding to an $m^{th}$ piece of downlink data in the M pieces of downlink data are an $[M1*K1+(m-M1-1)*K2]^{th}$ resource block to an $[M1*K1+(m-M1-1)*K2+K2-1]^{th}$ resource block in K resource blocks; or

if M1=0, N resource blocks corresponding to an $m^{th}$ piece of downlink data in the M pieces of downlink data and A pieces of sidelink data are an $[M1*K1+(m-M1-1)*K2]^{th}$ resource block to an $[M1*K1+(m-M1-1)*K2+K2-1]^{th}$ resource block in K resource blocks, wherein

K1 is $\left\lceil \dfrac{K}{M+A} \right\rceil$ , K2 is $\left\lfloor \dfrac{K}{M+A} \right\rfloor$ , M1 is a remainder of $\dfrac{K}{M+A}$ , and | | represents a ceiling operation.

19. The method according to any one of claims 14 to 18, wherein determining, by the first terminal device, the first quantity comprises:

receiving, by the first terminal device, fourth information from the network device, wherein the fourth information indicates the first quantity; or

determining, by the first terminal device, the first quantity based on at least one of the following information: the time gap set, time domain resource allocation TDRA of the first link, the subcarrier spacing of the first link, the subcarrier spacing of the second link, a period of the first transmission resource, or the first time unit, wherein the first time unit is one time gap in the time gap set.

20. The method according to any one of claims 14 to 19, wherein when the first terminal device does not receive second downlink data in the downlink data set, the method further comprises:

skipping, by the first terminal device, transmitting HARQ-ACK information on a second transmission resource corresponding to the second downlink data, or feeding back a negative acknowledgement NACK on the second transmission resource.

21. The method according to any one of claims 14 to 20, wherein when the first terminal device is one of a plurality of terminal devices that feed back HARQ-ACK information through the second terminal device, the method further comprises:

sending, by the first terminal device, the first HARQ-ACK information to the second terminal device on the first transmission resource in a code division multiplexing manner.

22. The method according to any one of claims 8 to 21, wherein before receiving the first downlink data from the network device, the method further comprises:

receiving, by the first terminal device, fourth configuration information from the network device, wherein the fourth configuration information is used to configure R resource pools, the first transmission resource is a resource in one of the R resource pools, and R is a positive integer.

23. The method according to any one of claims 1 to 22, wherein the first downlink data comprises a physical downlink shared channel PDSCH, the first link is a link for communication based on a first communication interface, the second link is a link for communication based on a second communication interface, the first communication interface is a first Uu interface, the second communication interface is a PC5 interface, the first terminal device comprises an extended reality XR device, and the second terminal device comprises a mobile terminal.

24. A communication method, comprising:

sending, by a network device, first downlink data to a first terminal device through a first link; and

receiving, by the network device, fifth information from a second terminal device through a third link, wherein the fifth information comprises first hybrid automatic repeat request acknowledgement HARQ-ACK information, and the first HARQ-ACK information indicates a first decoding result corresponding to the first downlink data, wherein the first link is a transmission link between the first terminal device and the network device, and the third link is a transmission link between the second terminal device and the network device.

25. The method according to claim 24, wherein the method further comprises:

configuring, by the network device, a first transmission resource for the first terminal device through the first link, wherein the first transmission resource is used by the first terminal device to send first information to the second terminal device through a second link, the first information comprises the first HARQ-ACK information, and the second link is a transmission link between the first terminal device and the second terminal device.

26. The method according to claim 25, wherein the first transmission resource comprises a first time domain resource and a first frequency domain resource, the first time domain resource is in a first time unit, and the method further comprises:

sending, by the network device, first control information to the first terminal device, wherein the first control information indicates a first time gap; or

before sending the first downlink data to the first terminal device, sending, by the network device, first configuration information to the first terminal device, wherein the first configuration information indicates a first time gap, wherein

the first time gap is less than or equal to a time gap between the first time unit and a second time unit, the second time unit is a time unit in which the first terminal device receives the first downlink data or a time unit in which the first terminal device receives the first control information, and the first control information is further used to schedule the first downlink data.

27. The method according to claim 26, wherein before sending, by the network device, the first control information to the first terminal device, the method further comprises:

sending, by the network device, second configuration information to the first terminal device, wherein the second configuration information is used to configure a time gap set, and the first time gap is one time gap in the time gap set.

28. The method according to claim 26 or 27, wherein when the first time gap is measured in slots, the method further comprises:

sending, by the network device, a first parameter to the first terminal device, wherein the first parameter indicates that a subcarrier spacing SCS referenced by the first time gap is a first SCS or a second SCS, the first SCS is an SCS corresponding to the first link, the second SCS is an SCS corresponding to the second link, and the first link is different from the second link.

29. The method according to any one of claims 26 to 28, wherein the first transmission resource is a physical sidelink shared channel PSSCH, and the method further comprises:

sending, by the network device, the first control information to the first terminal device, wherein the first control information comprises second information, and the second information indicates the first time domain resource and the first frequency domain resource; or
before sending the first downlink data to the first terminal device, sending, by the network device, third configuration information to the first terminal device, wherein the third configuration information indicates the first time domain resource and the first frequency domain resource.

30. The method according to any one of claims 26 to 28, wherein the first frequency domain resource is a resource block occupied by a physical sidelink feedback channel PSFCH, and the method further comprises:

sending, by the network device, the first control information to the first terminal device, wherein the first control information comprises third information, and the third information indicates the first frequency domain resource; or
before the network device sends the first downlink data to the first terminal device, sending, by the network device, fourth information to the first terminal device, wherein the fourth information indicates a first quantity M of downlink data in a first downlink data set, and the first quantity is used to determine the first frequency domain resource, wherein
the first downlink data is one of the M pieces of downlink data, M pieces of HARQ-ACK information corresponding to the M pieces of downlink data are all transmitted on the PSFCH, and M is a positive integer.

31. The method according to claim 29 or 30, wherein the method further comprises:
sending, by the network device, fourth configuration information to the first terminal device, wherein the fourth configuration information is used to configure R resource pools, the first transmission resource is a resource in one of the R resource pools, and R is a positive integer.

32. The method according to any one of claims 25 to 31, wherein the first downlink data comprises a physical downlink shared channel PDSCH, the first link is a link for communication based on a first communication interface, the second link is a link for communication based on a second communication interface, the third link is a link for communication based on a third communication interface, the first communication interface is a first Uu interface, the second communication interface is a PC5 interface, and the third communication interface is a second Uu interface.

33. A terminal device, wherein the terminal device comprises a processor and a memory, the processor is coupled to the memory, the memory is configured to store a computer program, and when the processor runs the computer program, the terminal device is enabled to perform the method according to any one of claims 1 to 23.

34. A network device, wherein the network device comprises a processor and a memory, the processor is coupled to the memory, the memory is configured to store a computer program, and when the processor runs the computer program, the network device is enabled to perform the method according to any one of claims 24 to 32.

35. A computer-readable storage medium, wherein the computer-readable storage medium stores computer instructions, and when the computer instructions are run on a terminal device, the terminal device is enabled to perform the method according to any one of claims 1 to 23; or when the computer instructions are run on a network device, the network device is enabled to perform the method according to any one of claims 24 to 32.

36. A computer program product, comprising instructions, wherein when the computer instructions are run on a terminal device, the terminal device is enabled to perform the method according to any one of claims 1 to 23; or when the computer instructions are run on a network device, the network device is enabled to perform the method according to any one of claims 24 to 32.

37. A chip, wherein the chip comprises a processor and a communication interface, the processor reads instructions through the communication interface and runs the instructions, and when the chip is installed in a terminal device, the terminal device is enabled to perform the method according to any one of claims 1 to 23; or when the chip is installed in a network device, the network device is enabled to perform the method according to any one of claims 24 to 32.

38. A communication system, wherein the communication system comprises a terminal device and a network device, wherein the terminal device is configured to perform the method according to any one of claims 1 to 23, and the network device is configured to perform the method according to any one of claims 24 to 32.

EP 4 648 322 A1

FIG. 1

FIG. 2

| D0 | D1 | D2 | D3 | U0 | D4 | D5 | D6 | D7 | U1 |
|----|----|----|----|----|----|----|----|----|----|

FIG. 3

| S0 | S1 | S2 | S3 PSFCH | S4 | S5 | S6 | S7 PSFCH |
|----|----|----|----------|----|----|----|----------|

Minimum slot offset=2

FIG. 4

PSSCH transmission resource

| | | | | | PRB 15 |
| | | | | | PRB 14 |
| | | | | | PRB 13 |
| | | | | | PRB 12 |
| Subchannel 1 | Subchannel 1 | Subchannel 1 | Subchannel 1 | | PRB 11 |
| | | | | | PRB 10 |
| | | | | | PRB 9 |
| | | | | | PRB 8 |
| | | | | | PRB 7 |
| | | | | | PRB 6 |
| | | | | | PRB 5 |
| Subchannel 0 | Subchannel 0 | Subchannel 0 | Subchannel 0 | | PRB 4 |
| | | | | | PRB 3 |
| | | | | | PRB 2 |
| | | | | | PRB 1 |
| | | | | | PRB 0 |

Slot 0  Slot 1  Slot 2  Slot 3

FIG. 5

Frequency domain

| PRB 3 |
| PRB 2 |
| PRB 1 |
| PRB 0 |

| PRB $3_0$ | PRB $3_1$ | ... | PRB $3_{N_{CS}^{PSECH-1}}$ |
| PRB $2_0$ | PRB $2_1$ | ... | PRB $2_{N_{CS}^{PSECH-1}}$ |
| PRB $1_0$ | PRB $1_1$ | ... | PRB $1_{N_{CS}^{PSECH-1}}$ |
| PRB $0_0$ | PRB $0_1$ | ... | PRB $0_{N_{CS}^{PSECH-1}}$ |

Code domain

FIG. 6

First terminal device  Second terminal device  Network device

S710: First downlink data

S720: Decode the first downlink data to obtain a first decoding result

S730: First information

S740: Fifth information

FIG. 7

First terminal device  Network device

S811: Second configuration information

S810: First control information

Manner 2.1 — S821: Second information

Manner 2.2 — S822: Third information

FIG. 8

FIG. 9

FIG. 10

FIG. 11

| Uu #2 | D0 | D1 | D2 | D3 | U | D | D | D | D | U |
|-------|----|----|----|----|---|---|---|---|---|---|

| PC5 | S | S | PSFCH | S | S | PSFCH | S | S | PSFCH | S | S | PSFCH | S | S | PSFCH |
|-----|---|---|-------|---|---|-------|---|---|-------|---|---|-------|---|---|-------|

FIG. 12

FIG. 13

EP 4 648 322 A1

FIG. 14

Uu #2 | D0 | D1 | D2 | D3 | U | D4

PC5 | S | S PSFCH S | S PSFCH S | S PSFCH S | S PSFCH S | S PSFCH S | S PSFCH S | S PSFCH

(a)

Uu #2 | D0 | D1 | D2 | D3 | U | D4 | D5 | D6 | D7 | U | D8 | D9

PC5 | S | S PSFCH | S | S PSFCH | S | S PSFCH

(b)

FIG. 15

FIG. 16

FIG. 17

EP 4 648 322 A1

FIG. 18

Uu #2

| D0 | D1 | D2 | D3 | U | D | D | D | D | U |

PC5

| S | S PSFCH | S | S PSFCH | S | S PSFCH | S | S PSFCH | S | S PSFCH |

PDSCH 1

| PRB 9 | PRB 8 | PRB 7 | PRB 6 | PRB 5 |

PDSCH 0

| PRB 4 | PRB 3 | PRB 2 | PRB 1 | PRB 0 |

Frequency domain

Code domain

| $PRB\,4_0$ | $PRB\,4_1$ | ... | $PRB\,4_{N_{CS}^{PSECH}}$ |
| $PRB\,3_0$ | $PRB\,3_1$ | ... | $PRB\,3_{N_{CS}^{PSECH}}$ |
| $PRB\,2_0$ | $PRB\,2_1$ | ... | $PRB\,2_{N_{CS}^{PSECH}}$ |
| $PRB\,1_0$ | $PRB\,1_1$ | ... | $PRB\,1_{N_{CS}^{PSECH}}$ |
| $PRB\,0_0$ | $PRB\,0_1$ | ... | $PRB\,0_{N_{CS}^{PSECH}}$ |

FIG. 19

58

EP 4 648 322 A1

FIG. 20

10

Transceiver module 11

Processing module 12

Storage module 13

FIG. 21

20

Processor 21

Transceiver 23

Memory 22

FIG. 22

Chip system 30

Logic circuit 31

Input/Output interface 32

FIG. 23

## INTERNATIONAL SEARCH REPORT

| | International application No. |
|---|---|
| | **PCT/CN2023/134951** |

### A.    CLASSIFICATION OF SUBJECT MATTER

H04L1/18(2023.01)i;  H04L5/00(2006.01)i

According to International Patent Classification (IPC) or to both national classification and IPC

### B.    FIELDS SEARCHED

Minimum documentation searched (classification system followed by classification symbols)

IPC:  H04L

Documentation searched other than minimum documentation to the extent that such documents are included in the fields searched

Electronic data base consulted during the international search (name of data base and, where practicable, search terms used)

3GPP, CNTXT, ENTXT, ENTXTC, CNKI: 电量, 发射, 发送, 功耗, 功率, 解码, 上行, 数据, 头戴, 下行, 虚拟现实, 译码, 解码, 增强现实, 中继, 转发, ACK, AR, HARQ, HMD, NACK, PDSCH, PSCCH, PSFCH, relay, sidelink, SL, uplink, UU, VR, XR, eXtended Reality

### C.    DOCUMENTS CONSIDERED TO BE RELEVANT

| Category* | Citation of document, with indication, where appropriate, of the relevant passages | Relevant to claim No. |
|---|---|---|
| X | US 2020127768 A1 (LG ELECTRONICS INC.) 23 April 2020 (2020-04-23) <br> description, paragraphs [0158]-[0218] | 1-38 |
| X | CN 115280702 A (QUALCOMM INC.) 01 November 2022 (2022-11-01) <br> description, paragraphs [0060]-[0211] | 1-38 |
| X | CN 115244878 A (QUALCOMM INC.) 25 October 2022 (2022-10-25) <br> description, paragraphs [0069]-[0186] | 1-38 |
| A | CN 101488838 A (ZTE CORP.) 22 July 2009 (2009-07-22) <br> entire document | 1-38 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 January 2024** | **04 February 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/134951** |

| Patent document cited in search report | | | Publication date (day/month/year) | Patent family member(s) | | | Publication date (day/month/year) |
| --- | --- | --- | --- | --- | --- | --- | --- |
| US | 2020127768 | A1 | 23 April 2020 | EP | 3605896 | A1 | 05 February 2020 |
| | | | | WO | 2018194388 | A1 | 25 October 2018 |
| CN | 115280702 | A | 01 November 2022 | WO | 2021188381 | A1 | 23 September 2021 |
| | | | | US | 2021289419 | A1 | 16 September 2021 |
| | | | | EP | 4122136 | A1 | 25 January 2023 |
| CN | 115244878 | A | 25 October 2022 | EP | 4122129 | A1 | 25 January 2023 |
| | | | | US | 2021289529 | A1 | 16 September 2021 |
| | | | | WO | 2021188382 | A1 | 23 September 2021 |
| CN | 101488838 | A | 22 July 2009 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310208329
- CN 202310260750